(19) Europäisches Patentamt / European Patent Office / Office européen des brevets

(11) **EP 4 644 330 A1**

(12) **EUROPEAN PATENT APPLICATION**
published in accordance with Art. 153(4) EPC

(43) Date of publication:
**05.11.2025 Bulletin 2025/45**

(21) Application number: **24775195.1**

(22) Date of filing: **20.03.2024**

(51) International Patent Classification (IPC):
*C01G 53/00* (2025.01)  *H01M 4/36* (2006.01)
*H01M 4/505* (2010.01)  *H01M 4/525* (2010.01)
*H01M 4/02* (2006.01)

(52) Cooperative Patent Classification (CPC):
**C01G 53/00; H01M 4/02; H01M 4/36; H01M 4/505; H01M 4/525; Y02E 60/10**

(86) International application number:
**PCT/KR2024/003488**

(87) International publication number:
**WO 2024/196148 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **20.03.2023  KR 20230035835**

(71) Applicant: **LG CHEM, LTD.**
**Seoul 07336 (KR)**

(72) Inventors:
• **KIM, Woo Hyun**
  **Daejeon 34122 (KR)**
• **LEE, Sang Tae**
  **Daejeon 34122 (KR)**
• **KIM, So Min**
  **Daejeon 34122 (KR)**
• **BEAK, Chan Ju**
  **Daejeon 34122 (KR)**

• **GU, Geon Woo**
  **Daejeon 34122 (KR)**
• **NAM, Chae Young**
  **Daejeon 34122 (KR)**
• **YU, So Yoon**
  **Daejeon 34122 (KR)**
• **HWANG, Byung Hyun**
  **Daejeon 34122 (KR)**
• **KIM, Su Jeong**
  **Daejeon 34122 (KR)**
• **KIM, Won Tae**
  **Daejeon 34122 (KR)**
• **KIM, Seong Bae**
  **Daejeon 34122 (KR)**
• **KIM, Jun Gil**
  **Daejeon 34122 (KR)**
• **LIM, Young Geun**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL PRECURSOR AND METHOD FOR PRODUCING SAME**

(57)    The present invention relates to a positive electrode active material precursor with a novel structure and a method of preparing the same, wherein the present invention relates to a positive electrode active material precursor including a composite transition metal hydroxide which includes a core portion including first primary particles; and a shell portion formed on the core portion and including second primary particles, wherein, in a cross section of the positive electrode active material precursor, a ratio (A2/A1) of an average cross-sectional area (A2) of the second primary particles to an average cross-sectional area (A1) of the first primary particles is in a range of 3.00 to 10.0, and a method of preparing the same.

**(Cont. next page)**

[FIG. 1]

100

200

**Description**

**TECHNICAL FIELD**

Cross-reference to Related Applications

This application claims priority from Korean Patent Application No. 10-2023-0035835, filed on March 20, 2023, the disclosure of which is incorporated by reference herein.

Technical Field

The present invention relates to a positive electrode active material precursor with a novel structure and a method of preparing the same.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, the $LiCoO_2$ has very poor thermal properties due to an unstable crystal structure caused by delithiation. Also, since the $LiCoO_2$ is expensive, there is a limitation in using a large amount of the $LiCoO_2$ as a power source for applications such as electric vehicles.

Thus, lithium manganese-based metal oxides ($LiMnO_2$ or $LiMn_2O_4$), lithium iron phosphate compounds ($LiFePO_4$, etc.), or lithium nickel-based oxides ($LiNiO_2$, etc.) have been developed as materials for replacing the $LiCoO_2$. Among these materials, research and development of the lithium nickel-based oxides, in which a large capacity battery may be easily achieved due to a high reversible capacity of about 200 mAh/g, have been more actively conducted. However, the $LiNiO_2$ had limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, a NCM-based positive electrode active material, in which a portion of nickel (Ni) is substituted with cobalt (Co), manganese (Mn), and/or aluminum (Al), has been developed.

Recently, as the demand for secondary batteries with high energy density has increased, a high-nickel (High-Ni) NCM-based positive electrode active material with a high nickel content has been developed to increase capacity of the positive electrode active material. Also, due to a recent increase in the price of Co, a high-manganese (Mn-rich) NCM-based positive electrode active material, which may meet high capacity while containing a relatively low Co content, has been developed.

With respect to the high-Ni-based positive electrode active material, since it has an advantage of developing large capacity, but, due to the high nickel content, an amount of the nickel oxidized is increased in the same voltage range, an amount of lithium ion movement is increased, and, as a result, there is a problem in that structural stability of the positive electrode active material is reduced to degrade long-term lifetime and thermal stability. Accordingly, there is a need to develop a high-Ni NCM-based positive electrode active material having excellent physical properties, such as life characteristics and thermal stability, as well as high capacity characteristics. Particularly, recently, in order to solve the structural and thermal stability problem of a positive electrode material in a form of a secondary particle itself, development of a positive electrode material in a form of a single particle has been accelerated. However, with respect to the positive electrode active material in the form of a (small) single particle with a small particle size, cycle characteristics are excellent, but there is a problem in that resistance characteristics are poor. Therefore, there is a need to develop a precursor which may achieve a positive electrode active material in the form of a small single particle with excellent resistance characteristics as well as excellent cycle characteristics. In addition, there is a need to develop a high-density Mn-rich NCM-based positive electrode active material to improve capacity and lifetime, and development of a precursor, which may achieve the high-density Mn-rich NCM-based positive electrode active material, is necessary.

[Prior Art Documents]

[Patent Document]

Korean Patent Application Laid-open Publication No. 10-2013-129449

## DISCLOSURE OF THE INVENTION

### TECHNICAL PROBLEM

An aspect of the present invention provides a positive electrode active material precursor with a novel structure, which may achieve excellent lifetime and resistance characteristics, and a method of preparing the same.

Also, another aspect of the present invention provides a positive electrode active material precursor with a novel structure, in which a particle size is uniform and sphericity is excellent, and a method of preparing the same.

### TECHNICAL SOLUTION

The present invention provides a positive electrode active material precursor and a method of preparing the same.

(1) The present invention provides a positive electrode active material precursor including a composite transition metal hydroxide which includes a core portion including first primary particles; and a shell portion formed on the core portion and including second primary particles, wherein, in a cross section of the positive electrode active material precursor, a ratio (A2/A1) of an average cross-sectional area (A2) of the second primary particles to an average cross-sectional area (A1) of the first primary particles is in a range of 3.00 to 10.0.

(2) The present invention provides the positive electrode active material precursor of (1) above, wherein the positive electrode active material precursor has an average particle diameter ($D_{50}$) of 2.0 $\mu$m to 11.0 $\mu$m.

(3) The present invention provides the positive electrode active material precursor of (1) or (2) above, wherein the core portion is in a form of a spherical secondary particle that is formed by aggregation of the first primary particles.

(4) The present invention provides the positive electrode active material precursor of any one of (1) to (3) above, wherein the composite transition metal hydroxide has a composition represented by Formula 1.

$$[\text{Formula 1}] \qquad [\text{Ni}_{a1}\text{Co}_{b1}\text{M1}_{c1}\text{M2}_{d1}](\text{OH})_2$$

In Formula 1,

M1 is at least one selected from manganese (Mn) and aluminum (Al),
M2 is at least one selected from yttrium (Y), zirconium (Zr), boron (B), titanium (Ti), tungsten (W), niobium (Nb), strontium (Sr), molybdenum (Mo), magnesium (Mg), phosphorus (P), vanadium (V), tantalum (Ta), gallium (Ga), and calcium (Ca), and
$0.6 \leq a1 < 1$, $0 < b1 \leq 0.4$, $0 < c1 \leq 0.4$, and $0 \leq d1 \leq 0.2$.

(5) The present invention provides the positive electrode active material precursor of any one of (1) to (3) above, wherein the composite transition metal hydroxide has a composition represented by Formula 2.

$$[\text{Formula 2}] \qquad [\text{Mn}_{a2}\text{Ni}_{b2}\text{Co}_{c2}\text{M}_{d2}](\text{OH})_2$$

In Formula 2,

M is at least one selected from Al, Y, Zr, B, Ti, W, Nb, Sr, Mo, Mg, P, V, Ta, Ga, and Ca, and
$0.5 \leq a2 < 1$, $0 < b2 \leq 0.5$, $0 < c2 < 0.5$, and $0 \leq d2 \leq 0.2$.

(6) The present invention provides the positive electrode active material precursor of (4) above, wherein, in the cross section of the positive electrode active material precursor, the ratio (A2/A1) of the average cross-sectional area (A2) of the second primary particles to the average cross-sectional area (A1) of the first primary particles is in a range of 4.60 to 5.00, and an average particle diameter ($D_{50}$) is in a range of 2.00 $\mu$m to 5.00 $\mu$m.

(7) The present invention provides the positive electrode active material precursor of (5) above, wherein, in the cross section of the positive electrode active material precursor, the ratio (A2/A1) of the average cross-sectional area (A2) of the second primary particles to the average cross-sectional area (A1) of the first primary particles is in a range of 3.00 to 4.60, and an average particle diameter ($D_{50}$) is in a range of 9.50 $\mu$m to 11.00 $\mu$m.

(8) The present invention provides the positive electrode active material precursor of any one of (1) to (7) above, wherein the average cross-sectional area (A1) of the first primary particles is in a range of 0.0100 $\mu m^2$ to 0.0200 $\mu m^2$.

(9) The present invention provides the positive electrode active material precursor of any one of (1) to (8) above, wherein the average cross-sectional area (A2) of the second primary particles is in a range of 0.0500 $\mu m^2$ to 0.1000 $\mu m^2$.

(10) The present invention provides the positive electrode active material precursor of any one of (1) to (9) above, wherein, in the cross section of the positive electrode active material precursor, a percentage of a cross-sectional area of all pores present in the core portion to a cross-sectional area of the core portion is in a range of 11.00% to 30.00%.

(11) The present invention provides the positive electrode active material precursor of any one of (1) to (10) above, wherein, in the cross section of the positive electrode active material precursor, a percentage of a cross-sectional area of all pores present in the shell portion to a cross-sectional area of the shell portion is in a range of 2.00% to 7.00%.

(12) The present invention provides the positive electrode active material precursor of any one of (1) to (11) above, wherein, in the cross section of the positive electrode active material precursor, a difference (C-S) between a percentage (C) of a cross-sectional area of all pores present in the core portion to a cross-sectional area of the core portion and a percentage (S) of a cross-sectional area of all pores present in the shell portion to a cross-sectional area of the shell portion is in a range of 5.00% to 28.00%.

(13) The present invention provides the positive electrode active material precursor of any one of (1) to (12) above, wherein, in the cross section of the positive electrode active material precursor, a percentage of a cross-sectional area of the core portion to a cross-sectional area of the positive electrode active material precursor is in a range of 5.00% to 50.00%.

(14) The present invention provides a method of preparing the positive electrode active material precursor of any one of (1) to (9) above using a reaction apparatus connected to a reactor and a continuous grinder which includes steps of: (S1) introducing a transition metal-containing solution, an ammonium ion-containing solution, and a basic aqueous solution into the reactor to form positive electrode active material precursor seeds through a co-precipitation reaction, and simultaneously operating the continuous grinder to repeat a process of discharging the positive electrode active material precursor seeds from the reactor into the continuous grinder and reintroducing the positive electrode active material precursor seeds from the continuous grinder into the reactor; and (S2) stopping the operation of the continuous grinder, and growing positive electrode active material precursor particles in the reactor, wherein step (S1) is performed while gradually decreasing a pH, and step (S2) is performed while gradually increasing the pH.

(15) The present invention provides the method of (14) above, wherein step (S1) is performed while gradually decreasing the pH within a range of 12.6 to 11.2.

(16) The present invention provides the method of (14) or (15) above, wherein step (S2) is performed while gradually increasing the pH within a range of 11.2 to 12.6.

(17) The present invention provides a method of preparing the positive electrode active material precursor of any one of (1) to (9) above which includes steps of: (S1') introducing a transition metal-containing solution and a basic aqueous solution into a reactor to form positive electrode active material precursor seeds through a co-precipitation reaction; and (S2') introducing a transition metal-containing solution and a basic aqueous solution into the reactor containing the positive electrode active material precursor seeds to grow positive electrode active material precursor particles through a co-precipitation reaction, wherein step (S1') is performed while maintaining a pH within a range of 9.0 to 11.0 after gradually decreasing the pH from 12.0 or more to a range of 9.0 to 11.0, and step (S2') is performed while maintaining the pH within a range of 9.0 to 11.0 after gradually decreasing the pH from a range of 11.5 to 11.7 to a range of 9.0 to 11.0.

(18) The present invention provides the method of (17) above, wherein step (S1') is performed in an oxidizing atmosphere.

## ADVANTAGEOUS EFFECTS

Since a positive electrode active material precursor according to the present invention includes a composite transition metal hydroxide which includes a core portion including first primary particles; and a shell portion formed on the core portion and including second primary particles and a ratio (A2/A1) of an average cross-sectional area (A2) of the second primary particles to an average cross-sectional area (A1) of the first primary particles satisfies a range of 3.00 to 10.0, a high-density positive electrode active material precursor with a uniform particle size and excellent sphericity may be provided.

Also, in a case in which the positive electrode active material precursor is a high-Ni NCM-based positive electrode active material, when a mixture of the positive electrode active material precursor and a lithium-containing raw material is sintered, a positive electrode active material in a form of a single particle with a high degree of single-particle formation may be easily formed, and lithium may easily diffuse to the core portion to achieve a low resistance positive electrode active material. Thus, both capacity characteristics and life characteristics of a battery, in which the positive electrode active material prepared from the positive electrode active material precursor according to the present invention is used, may be improved.

A method of preparing a positive electrode active material according to an embodiment of the present invention may not only increase formation efficiency of the positive electrode active material precursor, but may also easily provide the positive electrode active material precursor according to the present invention by using a reaction apparatus connected to a reactor and a continuous grinder and appropriately adjusting a pH.

A method of preparing a positive electrode active material according to another embodiment of the present invention may easily provide the positive electrode active material precursor according to the present invention by appropriately adjusting a pH and introduction or non-introduction of an ammonium ion-containing solution.

## BRIEF DESCRIPTION OF THE DRAWINGS

FIG. 1 is a view schematically illustrating a reaction apparatus which may be used in a method of preparing a positive electrode active material precursor of the present invention.

FIG. 2(A) is a view illustrating a pH according to preparation time of a positive electrode active material precursor of Example 1, and 2(B) is a view illustrating a pH according to preparation time of a positive electrode active material precursor of Comparative Example 1.

FIG. 3 is cross-sectional scanning electron microscope (SEM) images of positive electrode active material precursors prepared in (A) Example 1, (B) Example 2, (C) Example 3, (D) Comparative Example 1, and (E) Comparative Example 2.

FIGS. 4(A) to 4(C) are images obtained by analyzing FIG. 3(A) using Image J.

FIGS. 5(A) to 5(C) are images obtained by analyzing FIG. 3(D) using Image J.

FIG. 6 illustrates (A) an SEM image of an embodiment according to the present invention and (B) a segmentation image obtained by image processing the SEM image.

FIG. 7 is a view illustrating definitions of a minor axis and a major axis for calculating an aspect ratio of a particle.

FIG. 8 illustrates (A) an SEM image of a positive electrode active material prepared by using the positive electrode active material precursor of Example 1, and (B) an SEM image of a positive electrode active material prepared by using the positive electrode active material precursor of Comparative Example 1.

## BEST MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms 'include,' 'comprise,' or 'have' in this specification specify the presence of stated features, numbers, steps, elements, or combinations thereof, but do not preclude the presence or addition of one or more other features, numbers, steps, elements, or combinations thereof.

The term 'on' in the present specification means not only a case in which one component is formed directly on an upper surface of another component, but also includes a case in which intervening components may also be present.

In the present specification, 'a positive electrode active material in a form of a single particle' is a concept in contrast to a positive electrode active material in a form of a spherical secondary particle which is formed by aggregation of tens to hundreds of primary particles prepared by a conventional method, wherein it means a positive electrode active material composed of 10 or less primary particles. Specifically, the positive electrode active material in the form of a single particle in the present invention may be a single particle composed of one primary particle, or may be a secondary particle in which several primary particles are aggregated.

A 'primary particle' means a smallest unit of particle which is recognized when observing the positive electrode active material through a scanning electron microscope, and a 'secondary particle' means a secondary structure formed by aggregating a plurality of primary particles.

In the present specification, an 'average cross-sectional area of primary particles' is an average cross-sectional area of one primary particle, wherein it is a value obtained by dividing a total cross-sectional area of tens to hundreds of primary particles present in a cross section of a positive electrode active material precursor by the number of primary particles.

In the present specification, the expression 'average particle diameter ($D_{50}$)' denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

In the present specification, a 'cross-sectional area of the positive electrode active material precursor' means a total cross-sectional area of the primary particles present in the cross section of the positive electrode active material precursor, a 'cross-sectional area of a core portion' means a total cross-sectional area of the primary particles present in the core portion in the cross section of the positive electrode active material precursor, and a 'cross-sectional area of a shell portion' means a total cross-sectional area of the primary particles present in the shell portion in the cross section of the positive electrode active material precursor.

## Positive Electrode Active Material Precursor

The present invention provides a positive electrode active material precursor including: a core portion including first primary particles; and a shell portion formed on the core portion and including second primary particles, wherein, in a cross section of the positive electrode active material precursor, a ratio (A2/A1) of an average cross-sectional area (A2) of the second primary particles to an average cross-sectional area (A1) of the first primary particles is in a range of 3.00 to 10.0.

Since the larger the primary particle size of the shell portion of the positive electrode active material precursor is, the more difficult it is for lithium to diffuse to the core portion when a mixture of the precursor and a lithium-containing raw material is sintered, defects occur in the core portion. Thus, inventors of the present invention attempted to improve performance of a positive electrode active material by minimizing the thick shell portion of the primary particle and achieving the core portion in which the lithium diffuses easily.

The positive electrode active material precursor according to the present invention is characterized in that the ratio (A2/A1) of the average cross-sectional area (A2) of the second primary particles to the average cross-sectional area (A1) of the first primary particles satisfies a range of 3.00 to 10.0. In this case, there are advantages in that the positive electrode active material precursor has a uniform particle size, excellent sphericity, and high density. Also, when the mixture of the positive electrode active material precursor and the lithium-containing raw material is sintered, the lithium may easily diffuse to the core portion to achieve a low resistance positive electrode active material. The (A2/A1) value may specifically be 3.00 or more, 3.50 or more, 4.00 or more, 4.10 or more, 4.20 or more, or 4.30 or more, and may be 4.70 or less, 4.80 or less, 4.90 or less, 5.00 or less, 6.00 or less, 7.00 or less, 8.00 or less, 9.00 or less, or 10.00 or less.

In a case in which the (A2/A1) value is less than 3.00, since the lithium does not easily diffuse to the core portion when the mixture of the precursor and the lithium-containing raw material is sintered, defects may occur in the core portion. In addition, in a case in which the (A2/A1) value is greater than 10.0, addition of an electrolyte may not be smooth while a difference between internal and external structures of the positive electrode active material after sintering clearly occurs.

The positive electrode active material precursor according to the present invention may have an average particle diameter ($D_{50}$) of 2.0 $\mu$m to 11.00 $\mu$m. In a case in which the average particle diameter of the positive electrode active material precursor is within the above range, high-density positive electrode active materials of various sizes may be achieved.

According to the present invention, the core portion may be in the form of a spherical secondary particle that is formed by aggregation of the first primary particles. That is, the positive electrode active material precursor according to the present invention may have an overall spherical shape due to aggregation of the second primary particles on the core portion which is in the form of a spherical secondary particle that is formed by the aggregation of the first primary particles.

According to the present invention, the composite transition metal hydroxide may have a composition represented by Formula 1 or Formula 2 below.

$$[Formula\ 1] \quad [Ni_{a1}Co_{b1}M1_{c1}M2_{d1}](OH)_2$$

In Formula 1,

M1 is at least one selected from manganese (Mn) and aluminum (Al),
M2 is at least one selected from yttrium (Y), zirconium (Zr), boron (B), titanium (Ti), tungsten (W), niobium (Nb), strontium (Sr), molybdenum (Mo), magnesium (Mg), phosphorus (P), vanadium (V), tantalum (Ta), gallium (Ga), and calcium (Ca), and
$0.6 \leq a1 < 1$, $0 < b1 \leq 0.4$, $0 < c1 \leq 0.4$, and $0 \leq d1 \leq 0.2$.

a1 denotes an atomic fraction of nickel among metallic elements in the composite transition metal hydroxide having the composition represented by Formula 1, wherein a1 may satisfy $0.6 \leq a1 < 1$, $0.8 \leq a1 \leq 0.98$, or $0.85 \leq a \leq 0.95$.

b1 denotes an atomic fraction of cobalt among the metallic elements in the composite transition metal hydroxide having the composition represented by Formula 1, wherein b1 may satisfy $0 < b1 \leq 0.4$, $0.01 \leq b1 \leq 0.2$, or $0.01 \leq b1 \leq 0.15$.

c1 denotes an atomic fraction of M1 element among the metallic elements in the composite transition metal hydroxide having the composition represented by Formula 1, wherein c1 may satisfy $0 < c1 \leq 0.4$, $0.01 \leq c1 \leq 0.2$, or $0.01 \leq c1 \leq 0.15$.

d1 denotes an atomic fraction of M2 element among the metallic elements in the composite transition metal hydroxide having the composition represented by Formula 1, wherein d1 may satisfy $0 \leq d1 \leq 0.2$, $0 \leq d1 \leq 0.1$, or $0 \leq d1 \leq 0.05$.

$$[\text{Formula 2}] \qquad [Mn_{a2}Ni_{b2}Co_{c2}M_{d2}](OH)_2$$

In Formula 2,

M is at least one selected from Al, Y, Zr, B, Ti, W, Nb, Sr, Mo, Mg, P, V, Ta, Ga, and Ca, and $0.5 \leq a2 < 1$, $0 < b2 \leq 0.5$, $0 \leq c2 < 0.5$, and $0 \leq d2 \leq 0.2$.

a2 denotes an atomic fraction of manganese among metallic elements in the composite transition metal hydroxide having the composition represented by Formula 2, wherein a2 may satisfy $0.5 \leq a2 < 1$, $0.6 \leq a2 \leq 0.95$, or $0.65 \leq a2 \leq 0.9$.

b2 denotes an atomic fraction of nickel among the metallic elements in the composite transition metal hydroxide having the composition represented by Formula 2, wherein b2 may satisfy $0 < b2 \leq 0.5$, $0.05 \leq b2 \leq 0.4$, or $0.1 \leq b2 \leq 0.35$.

c2 denotes an atomic fraction of cobalt among the metallic elements in the composite transition metal hydroxide having the composition represented by Formula 2, wherein c2 may satisfy $0 \leq c2 < 0.5$, $0 \leq c2 \leq 0.2$, or $0 \leq c2 \leq 0.15$.

d2 denotes an atomic fraction of M element among the metallic elements in the composite transition metal hydroxide having the composition represented by Formula 2, wherein d2 may satisfy $0 \leq d2 \leq 0.2$, $0 \leq d2 \leq 0.1$, or $0 \leq d2 \leq 0.05$.

According to the present invention, in a case in which the composite transition metal hydroxide has the composition represented by Formula 1, in the cross section of the positive electrode active material precursor, the ratio (A2/A1) of the average cross-sectional area (A2) of the second primary particles to the average cross-sectional area (A1) of the first primary particles may be in a range of 4.60 to 5.00, and an average particle diameter ($D_{50}$) may be in a range of 2.00 $\mu$m to 5.00 $\mu$m. In this case, when the mixture of the positive electrode active material precursor and the lithium-containing raw material is sintered, a positive electrode active material in the form of a single particle with a high degree of single-particle formation may be easily formed, and since lithium may easily diffuse to the core portion, a low resistance positive electrode active material may be achieved. In addition, a span ($= (D_{95}-D_5)/D_{50}$) value may be 1.0 or less.

In the case that the composite transition metal hydroxide has the composition represented by Formula 1, the (A2/A1) value may specifically be 4.60 or more, and may be 4.70 or less, 4.80 or less, 4.90 or less, or 5.00 or less. In addition, the average particle diameter ($D_{50}$) may be 2.00 $\mu$m or more, 2.10 $\mu$m or more, 2.20 $\mu$m or more, 2.30 $\mu$m or more, 2.40 $\mu$m or more, 2.50 $\mu$m or more, 2.60 $\mu$m or more, 2.70 $\mu$m or more, 2.80 $\mu$m or more, 2.90 $\mu$m or more, 3.00 $\mu$m or more, 3.10 $\mu$m or more, 3.20 $\mu$m or more, or 3.30 $\mu$m or more, and may be 3.50 $\mu$m or less, 3.60 $\mu$m or less, 3.70 $\mu$m or less, 3.80 $\mu$m or less, 3.90 $\mu$m or less, 4.00 $\mu$m or less, 4.50 $\mu$m or less, or 5.00 $\mu$m or less.

According to the present invention, in a case in which the composite transition metal hydroxide has the composition represented by Formula 2, in the cross section of the positive electrode active material precursor, the ratio (A2/A1) of the average cross-sectional area (A2) of the second primary particles to the average cross-sectional area (A1) of the first primary particles may be in a range of 3.00 to 4.60, and an average particle diameter ($D_{50}$) may be in a range of 9.50 $\mu$m to 11.00 $\mu$m. In this case, even though the positive electrode active material precursor is a large particle, it may have a uniform particle size, excellent sphericity, and high density. In relation to particle size uniformity, a span ($= (D_{95}-D_5)/D_{50}$) value may be 0.65 or less.

In the case that the composite transition metal hydroxide has the composition represented by Formula 2, the (A2/A1) value may specifically be 3.00 or more, 3.50 or more, 4.00 or more, 4.10 or more, 4.20 or more, 4.30 or more, 4.31 or more, 4.32 or more, 4.33 or more, 4.34 or more, 4.35 or more, or 4.36 or more, and may be 4.53 or less, 4.54 or less, 4.55 or less, 4.56 or less, 4.57 or less, 4.58 or less, 4.59 or less, or 4.60 or less. In addition, the average particle diameter ($D_{50}$) may be 9.50 $\mu$m or more, 9.60 $\mu$m or more, 9.70 $\mu$m or more, 9.80 $\mu$m or more, 9.90 $\mu$m or more, or 9.95 $\mu$m or more, and may be 10.00 $\mu$m or less, 10.10 $\mu$m or less, 10.20 $\mu$m or less, 10.30 $\mu$m or less, 10.40 $\mu$m or less, 10.50 $\mu$m or less, 10.60 $\mu$m or less, 10.70 $\mu$m or less, 10.80 $\mu$m or less, 10.90 $\mu$m or less, or 11.00 $\mu$m or less.

According to the present invention, the average cross-sectional area (A1) of the first primary particles may be in a range of 0.0100 $\mu$m$^2$ to 0.0200 $\mu$m$^2$. In this case, when the mixture of the precursor and the lithium-containing raw material is sintered, the lithium may easily diffuse to the core portion, and, as a result, since a positive electrode active material without defects may be formed, the performance of the positive electrode active material may be improved. The average cross-sectional area of the first primary particles may specifically be 0.0100 $\mu m^2$ or more, 0.0110 $\mu m^2$ or more, 0.0120 $\mu m^2$ or more, 0.0130 $\mu m^2$ or more, or 0.0140 $\mu m^2$ or more, and may be 0.0199 $\mu m^2$ or less, or 0.0200 $\mu m^2$ or less.

In the case that the composite transition metal hydroxide has the composition represented by Formula 1, the A1 value may specifically be 0.0100 $\mu m^2$ or more, 0.0110 $\mu m^2$ or more, 0.0120 $\mu m^2$ or more, 0.0130 $\mu m^2$ or more, or 0.0140 $\mu m^2$ or more, and may be 0.0150 $\mu m^2$ or less, 0.0155 $\mu m^2$ or less, 0.0160 $\mu m^2$ or less, 0.0165 $\mu m^2$ or less, 0.0170 $\mu m^2$ or less, 0.0175 $\mu m^2$ or less, 0.0180 $\mu m^2$ or less, 0.0195 $\mu m^2$ or less, 0.0199 $\mu m^2$ or less, or 0.0200 $\mu m^2$ or less.

In the case that the composite transition metal hydroxide has the composition represented by Formula 2, the A1 value may specifically be 0.0100 $\mu m^2$ or more, 0.0110 $\mu m^2$ or more, 0.0120 $\mu m^2$ or more, 0.0130 $\mu m^2$ or more, 0.0140 $\mu m^2$ or more, 0.0150 $\mu m^2$ or more, 0.0160 $\mu m^2$ or more, 0.0170 $\mu m^2$ or more, 0.0180 $\mu m^2$ or more, or 0.0190 $\mu m^2$ or more, and may be 0.0199 $\mu m^2$ or less, or 0.0200 $\mu m^2$ or less.

According to the present invention, the average cross-sectional area (A2) of the second primary particles may be in a range of 0.0500 $\mu m^2$ to 0.1000 $\mu m^2$. In this case, when the mixture of the precursor and the lithium-containing raw material is sintered, a positive electrode active material in the form of a single particle or a positive electrode active material in the form of a secondary particle with high density may be easily formed. The average cross-sectional area of the second primary particles may specifically be 0.0500 $\mu m^2$ or more, 0.0550 $\mu m^2$ or more, 0.0600 $\mu m^2$ or more, or 0.0650 $\mu m^2$ or more, and may be 0.0900 $\mu m^2$ or less, 0.0950 $\mu m^2$ or less, or 0.1000 $\mu m^2$ or less.

In the case that the composite transition metal hydroxide has the composition represented by Formula 1, the A2 value may specifically be 0.0500 $\mu m^2$ or more, 0.0550 $\mu m^2$ or more, 0.0600 $\mu m^2$ or more, or 0.0650 $\mu m^2$ or more, and may be 0.0700 $\mu m^2$ or less, 0.0750 $\mu m^2$ or less, 0.0800 $\mu m^2$ or less, 0.0850 $\mu m^2$ or less, 0.0900 $\mu m^2$ or less, 0.0950 $\mu m^2$ or less, or 0.1000 $\mu m^2$ or less.

In the case that the composite transition metal hydroxide has the composition represented by Formula 2, the A2 value may specifically be 0.0500 $\mu m^2$ or more, 0.0550 $\mu m^2$ or more, 0.0600 $\mu m^2$ or more, or 0.0650 $\mu m^2$ or more, 0.0700 $\mu m^2$ or more, 0.0750 $\mu m^2$ or more, 0.0800 $\mu m^2$ or more, 0.0810 $\mu m^2$ or more, 0.0820 $\mu m^2$ or more, 0.0830 $\mu m^2$ or more, or 0.0840 $\mu m^2$ or more, and may be 0.0900 $\mu m^2$ or less, 0.0950 $\mu m^2$ or less, or 0.1000 $\mu m^2$ or less.

According to the present invention, in the cross section of the positive electrode active material precursor, a percentage of a cross-sectional area of all pores present in the core portion to a cross-sectional area of the core portion may be in a range of 11.00% to 30.00%. That is, in the cross section of the positive electrode active material precursor, a value according to Equation 1 below may be in a range of 12.00% to 30.00%. In this case, when a positive electrode active material is prepared by using the precursor, the positive electrode active material in the form of a single particle which has no defects in the core portion or the positive electrode active material in the form of a secondary particle with high density may be prepared. The value according to Equation 1 may specifically be 11.00% or more, 11.10% or more, 11.20% or more, 11.30% or more, 11.40% or more, or 11.50% or more, and may be 16.50% or less, 17.00% or less, 18.00% or less, 19.00% or less, 20.00% or less, 25.00% or less, or 30.00% or less.

[Equation 1]

$$\frac{\text{Cross-sectional area of all pores present in a core portion}\,(\mu m^2)}{\text{Cross-sectional area of the core portion}\,(\mu m^2)} \times 100\,(\%)$$

In the case that the composite transition metal hydroxide has the composition represented by Formula 1, the value according to Equation 1 may specifically be 11.00% or more, 11.10% or more, 11.20% or more, 11.30% or more, 11.40% or more, 11.50% or more, 12.00% or more, 13.00% or more, or 14.00% or more, and may be 14.50% or less, 15.00% or less, 15.50% or less, 16.00% or less, 16.50% or less, 17.00% or less, 18.00% or less, 19.00% or less, 20.00% or less, 25.00% or less, or 30.00% or less.

In the case that the composite transition metal hydroxide has the composition represented by Formula 2, the value according to Equation 1 may specifically be 11.00% or more, 11.10% or more, 11.20% or more, 11.30% or more, 11.40% or more, or 11.50% or more, and may be 16.50% or less, 17.00% or less, 18.00% or less, 19.00% or less, 20.00% or less, 25.00% or less, or 30.00% or less.

According to the present invention, in the cross section of the positive electrode active material precursor, a percentage of a cross-sectional area of all pores present in the shell portion to a cross-sectional area of the shell portion may be in a range of 2.00% to 7.00%. That is, in the cross section of the positive electrode active material precursor, a value according to Equation 2 below may be in a range of 2.00% to 5.00%. In this case, when a positive electrode active material is prepared by using the precursor, the high-density positive electrode active material may be prepared even at a low sintering temperature. The value according to Equation 2 may specifically be 2.00% or more, 3.00% or more, 4.00% or more, 4.10% or more, 4.20% or more, 4.30% or more, 4.40%, or 4.50% or more, and may be 6.30% or less, 6.40% or less, 6.50% or less, 6.60% or less, 6.70% or less, 6.80% or less, 6.90% or less, or 7.00% or less.

[Equation 2]

$$\frac{\text{Cross-sectional area of all pores present in a shell portion}\,(\mu m^2)}{\text{Cross-sectional area of the shell portion}\,(\mu m^2)} \times 100\,(\%)$$

In the case that the composite transition metal hydroxide has the composition represented by Formula 1, the value according to Equation 2 may specifically be 2.00% or more, 3.00% or more, 4.00% or more, 4.10% or more, 4.20% or more, 4.30% or more, 4.40%, or 4.50% or more, and may be 4.60% or less, 4.70% or less, 4.80% or less, 4.90% or less, 5.00% or less, 5.10% or less, 5.20% or less, 5.30% or less, 5.40% or less, 5.50% or less, 5.60% or less, 5.70% or less, 5.80% or less, 5.90% or less, 6.00% or less, 6.10% or less, 6.20% or less, 6.30% or less, 6.40% or less, 6.50% or less, 6.60% or less, 6.70% or less, 6.80% or less, 6.90% or less, or 7.00% or less.

In the case that the composite transition metal hydroxide has the composition represented by Formula 2, the value according to Equation 2 may specifically be 2.00% or more, 3.00% or more, 4.00% or more, 4.10% or more, 4.20% or more, 4.30% or more, 4.40%, 4.50% or more, 4.60% or more, 4.70% or more, 4.80% or more, 4.90% or more, 5.00% or more, 5.10% or more, 5.20% or more, 5.30% or more, 5.40% or more, 5.50% or more, 5.60% or more, 5.70% or more, 5.80% or more, 5.90% or more, or 6.00% or more, and may be 6.30% or less, 6.40% or less, 6.50% or less, 6.60% or less, 6.70% or less, 6.80% or less, 6.90% or less, or 7.00% or less.

According to the present invention, in the cross section of the positive electrode active material precursor, a difference (C-S) between the percentage (C) of the cross-sectional area of the all pores present in the core portion to the cross-sectional area of the core portion and the percentage (S) of the cross-sectional area of the all pores present in the shell portion to the cross-sectional area of the shell portion may be in a range of 5.00% to 28.00%. In this case, when the mixture of the positive electrode active material precursor and the lithium-containing raw material is sintered, a positive electrode active material in the form of a single particle which has a high degree of single-particle formation or a positive electrode active material in the form of a secondary particle with high density may be easily formed, and since the lithium may easily diffuse to the core portion, a low-resistance positive electrode active material may be achieved. The (C-S) value may specifically be 5.00% or more, 5.10% or more, or 5.20% or more, and may be 10.00% or less, 11.00% or less, 12.00% or less, 13.00% or less, 14.00% or less, 15.00% or less, 20.00% or less, 25.00% or less, or 28.00% or less.

In the case that the composite transition metal hydroxide has the composition represented by Formula 1, the (C-S) value may specifically be 5.00% or more, 5.10% or more, 5.20% or more, 5.50% or more, 6.00% or more, 7.00% or more, 8.00% or more, 9.00% or more, or 9.50% or more, and may be 10.00% or less, 11.00% or less, 12.00% or less, 13.00% or less, 14.00% or less, 15.00% or less, 20.00% or less, 25.00% or less, or 28.00% or less.

In the case that the composite transition metal hydroxide has the composition represented by Formula 2, the (C-S) value may specifically be 5.00% or more, 5.10% or more, or 5.20% or more, and may be 10.00% or less, 11.00% or less, 12.00% or less, 13.00% or less, 14.00% or less, 15.00% or less, 20.00% or less, 25.00% or less, or 28.00% or less.

According to the present invention, in the cross section of the positive electrode active material precursor, a percentage of the cross-sectional area of the core portion to a cross-sectional area of the positive electrode active material precursor may be in a range of 5.00% to 50.00%. That is, in the cross section of the positive electrode active material precursor, a value according to Equation 3 below may be in a range of 5.00% to 50.00%. In this case, when the mixture of the positive electrode active material precursor and the lithium-containing raw material is sintered, a positive electrode active material in the form of a single particle which has a high degree of single-particle formation or a positive electrode active material in the form of a secondary particle with high density may be easily formed. The value according to Equation 3 may specifically be 5.00% or more, 5.50% or more, 6.00% or more, 6.10% or more, 6.20% or more, or 6.30% or more, and may be 32.00% or less, 35.00% or less, 40.00% or less, 45.00% or less, or 50.00% or less.

[Equation 3]

$$\frac{\text{Cross-sectional area of core portion}\,(\mu m^2)}{\text{Cross-sectional area of positive electrode active material precursor}\,(\mu m^2)} \times 100\,(\%)$$

In the case that the composite transition metal hydroxide has the composition represented by Formula 1, the value according to Equation 3 may specifically be 5.00% or more, 5.50% or more, 6.00% or more, 6.10% or more, 6.20% or more, 6.30% or more, 6.50% or more, 7.00% or more, 10.00% or more, 15.00% or more, 20.00% or more, 25.00% or more, or 30.00% or more, and may be 32.00% or less, 35.00% or less, 40.00% or less, 45.00% or less, or 50.00% or less.

In the case that the composite transition metal hydroxide has the composition represented by Formula 2, the value according to Equation 3 may specifically be 5.00% or more, 5.50% or more, 6.00% or more, 6.10% or more, 6.20% or more, or 6.30% or more, and may be 10.00% or less, 15.00% or less, 20.00% or less, 25.00% or less, 30.00% or less, 32.00% or less, 35.00% or less, 40.00% or less, 45.00% or less, or 50.00% or less.

## Method (1) of Preparing Positive Electrode Active Material Precursor

Also, the present invention provides a method (1) of preparing the positive electrode active material precursor.

The method (1) of preparing the positive electrode active material precursor according to the present invention is a method of preparing a positive electrode active material precursor using a reaction apparatus connected to a reactor and a continuous grinder, wherein it includes steps of: (S1) introducing a transition metal-containing solution, an ammonium ion-containing solution, and a basic aqueous solution into the reactor to form positive electrode active material precursor seeds through a co-precipitation reaction, and simultaneously operating the continuous grinder to repeat a process of discharging the positive electrode active material precursor seeds from the reactor into the continuous grinder and reintroducing the positive electrode active material precursor seeds from the continuous grinder into the reactor; and (S2) stopping the operation of the continuous grinder, and growing positive electrode active material precursor particles in the reactor, wherein step (S1) is performed while gradually decreasing a pH, and step (S2) may be performed while gradually increasing the pH. As described above, the method of preparing the positive electrode active material precursor according to the present invention may not only increase formation efficiency of the positive electrode active material precursor, but may also easily provide the positive electrode active material precursor according to the present invention by using the reaction apparatus connected to the reactor and the continuous grinder and appropriately adjusting the pH.

The method (1) of preparing the positive electrode active material precursor is a preparation method suitable for preparing the positive electrode active material precursor including the composite transition metal hydroxide having the composition represented by Formula 1.

### Step (S1)

Step (S1) is a step of introducing a transition metal-containing solution, an ammonium ion-containing solution, and a basic aqueous solution into the reactor to form positive electrode active material precursor seeds through a co-precipitation reaction, and simultaneously operating the continuous grinder to repeat a process of discharging the positive electrode active material precursor seeds from the reactor into the continuous grinder and reintroducing the positive electrode active material precursor seeds from the continuous grinder into the reactor.

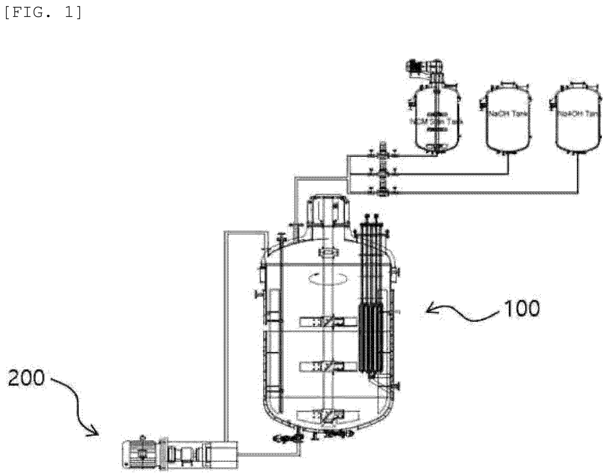

FIG. 1 is a view schematically illustrating a reaction apparatus which may be used in the method of preparing the positive electrode active material precursor of the present invention. The preparation method of the present invention uses the reaction apparatus to which a reactor 100 and a continuous grinder 200 are connected.

In step (S1), a transition metal-containing solution, an ammonium ion-containing solution, and a basic aqueous solution are introduced into the reactor 100, and positive electrode active material precursor seeds are formed in the reactor 100.

The reactor 100 may be used regardless of a type of reactor such as a batch type reactor, a continuous stirred tank reactor (CSTR), or a continuous filtered tank reactor (CFTR) .

More specifically, a reactor equipped with a filtration device inside the reactor, for example, a continuous filtered tank reactor (CFTR) may be used. In this case, the transition metal-containing solution, the ammonium ion-containing solution, and the basic aqueous solution may be introduced continuously.

A nucleus of a positive electrode active material precursor particle in the form of a primary particle is formed while a co-precipitation reaction is initiated by introducing the transition metal-containing solution, the ammonium ion-containing solution, and the basic aqueous solution, wherein the positive electrode active material precursor seed formed in step (S1) may refer to a seed which is formed by aggregation of the nuclei in the form of a primary particle. If the positive electrode active material precursor seeds go through the continuous grinder and are then introduced again into the reactor as described later, the positive electrode active material precursor seeds aggregate (through a particle growth process) to form a core of the positive electrode active material precursor.

The transition metal-containing solution may contain cations of at least one metal selected from nickel (Ni), manganese (Mn), cobalt (Co), tungsten (W), molybdenum (Mo), chromium (Cr), and aluminum (Al). The metal ion-containing solution may include acetic acid salts, nitrates, sulfates, halides, sulfides, hydroxides, oxides, or oxyhydroxides of the above metals, and is not particularly limited as long as it is soluble in water.

For example, the cobalt (Co) may be included as $Co(OH)_2$, $CoOOH$, $Co(OCOCH_3)_2 \cdot 4H_2O$, $Co(NO_3)_2 \cdot 6H_2O$, $CoSO_4$, or $Co(SO_4)_2 \cdot 7H_2O$, and any one thereof or a mixture of two or more thereof may be used. In addition, the nickel (Ni) may be included as $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, or a nickel halide, and any one thereof or a mixture of two or more thereof may be used. Also, the manganese (Mn) may be included as manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate, manganese citrate, and a fatty acid manganese salt; a manganese oxyhydroxide, or manganese chloride, and any one thereof or a mixture of two or more thereof may be used.

In a case in which the finally-prepared precursor further includes a second metal element (M) other than nickel (Ni), manganese (Mn), cobalt (Co), tungsten (W), molybdenum (Mo), chromium (Cr), and aluminum (Al) (for example, M is at least one element selected from zirconium (Zr), titanium (Ti), magnesium (Mg), tantalum (Ta), and niobium (Nb)), a raw material containing the second metal element may be optionally further added when preparing the transition metal-containing solution. The raw material containing the second metal element may include an acetic acid salt, nitrate, sulfate, halide, sulfide, hydroxide, oxide, or oxyhydroxide containing the second metal element, and any one thereof or a mixture of two or more thereof may be used. For example, in a case in which the second metal element is Zr, zirconium oxide or the like may be used.

The ammonium ion-containing solution may include at least one selected from $NH_4OH$, $(NH_4)_2SO_4$, $NH_4NO_3$, $NH_4Cl$, $CH_3COONH_4$, and $NH_4CO_3$. Water or a mixture of water and an organic solvent (specifically, alcohol, etc.), which may be uniformly mixed with the water, may be used as a solvent.

The basic aqueous solution may include at least one selected from a hydrate of alkali metal, a hydroxide of alkali metal, a hydrate of alkaline earth metal, and a hydroxide of alkaline earth metal. For example, the basic aqueous solution may include NaOH, KOH, or $Ca(OH)_2$, and water or a mixture of water and an organic solvent (specifically, alcohol, etc.), which may be uniformly mixed with the water, may be used as a solvent.

According to the present invention, step (S1) may be performed while gradually decreasing a pH within a range of 12.6 to 11.2. In this case, it may be advantageous for seed formation. The pH may be adjusted with the basic aqueous solution.

Since step (S1) includes a step of forming positive electrode active material precursor seeds, and simultaneously operating the continuous grinder to repeat a process of discharging the positive electrode active material precursor seeds from the reactor into the continuous grinder and reintroducing the positive electrode active material precursor seeds from the continuous grinder into the reactor, it may suppress growth of the particle by concentration of the positive electrode active material precursor seeds in the reactor.

The positive electrode active material precursor seeds formed in step (S1) are not concentrated in the reactor, but are ground in the continuous grinder and then reintroduced into the reactor.

If the reaction continues after the reaction solution is added to the reactor, particle aggregation occurs, and it tends to severely occur particularly until a reaction progress rate in the reactor reaches 30%. In the present invention, the aggregation is suppressed and the particle size is uniformly controlled by introducing the positive electrode active material precursor seeds into the continuous grinder to split them into small sizes before the reaction progresses significantly in the reactor to cause the particle aggregation.

Thus, the positive electrode active material precursor seeds reintroduced into the reactor through the above process in the present invention have a narrow and uniform particle size distribution. Accordingly, since the particle size is small and a contact area of the seed is large, the formation efficiency of the positive electrode active material precursor is not only increased, but, as a result, a positive electrode active material precursor with a uniform particle size may also be provided.

A rate at which the positive electrode active material precursor seeds are discharged from the reactor to the continuous grinder and a rate at which the positive electrode active material precursor seeds are reintroduced from the continuous grinder into the reactor may each independently be [reactor 100 capacity (L)×6]/[hr] or more, and may specifically be [reactor 100 capacity (L)×8]/[hr] or more, [reactor 100 capacity (L)×10]/[hr] or more, or [reactor 100 capacity (L)×12]/[hr]. In this case, an effect of grinding the seed into small sizes and controlling the particle size uniformly may be sufficiently achieved.

The method of preparing the positive electrode active material precursor according to the present invention may further include a step (S1$^+$) of repeating a process of discharging positive electrode active material precursor particles from the reactor to the continuous grinder and reintroducing the positive electrode active material precursor particles from the continuous grinder into the reactor by operating the continuous grinder while growing the positive electrode active material precursor particles by adding a reaction solution containing a transition metal-containing solution, an ammonium ion-containing solution, and a basic aqueous solution to the reactor, between step (S1) and step (S2). In this case, step (S1$^+$) may be performed while gradually increasing a pH.

In step (S1$^+$), descriptions of the transition metal-containing solution, the ammonium ion-containing solution, the basic aqueous solution, and the continuous grinder are the same as those in step (S1). That is, step (S1) and step (S1$^+$) may differ only in pH conditions.

Step (S1$^+$) may be performed while gradually increasing the pH within a range of 11.2 to 12.6. In this case, thin primary particles may be formed at a pH of 11.2 to 11.8, and thick primary particles may be formed at a pH of 11.8 to 12.6. The pH may be adjusted with the basic aqueous solution.

**Step (S2)**

Step (S2) is a step of stopping the operation of the continuous grinder, and growing positive electrode active material precursor particles in the reactor.

This is a step of preparing a positive electrode active material precursor using the positive electrode active material precursor seeds having a uniform particle size which have been obtained in the reactor through step (S1), wherein, in order to prevent the positive electrode active material precursor seeds from being continuously discharged into the continuous grinder and ground, the operation of the continuous grinder is stopped after step (S1) is sufficiently performed, and positive electrode active material precursor particles are grown while adding a reaction solution containing a transition metal-containing solution, an ammonium ion-containing solution, and a basic aqueous solution to the reactor.

According to the present invention, step (S2) may be performed while gradually increasing a pH within a range of 11.2 to 12.6. In this case, since thin primary particles are formed at a pH of 11.2 to 11.8 and thick primary particles are formed at a pH of 11.8 to 12.6, the positive electrode active material precursor according to the present invention may be prepared. The pH may be adjusted with the basic aqueous solution.

**Method (2) of Preparing Positive Electrode Active Material Precursor**

Furthermore, the present invention provides a method (2) of preparing the positive electrode active material precursor.

The method (2) of preparing the positive electrode active material precursor according to the present invention includes steps of: (S1') introducing a transition metal-containing solution and a basic aqueous solution into a reactor to form positive electrode active material precursor seeds through a co-precipitation reaction; and (S2') introducing a transition metal-containing solution and a basic aqueous solution into the reactor containing the positive electrode active material precursor seeds to grow positive electrode active material precursor particles through a co-precipitation reaction, wherein step (S1') is performed while maintaining a pH within a range of 9.0 to 11.0 after gradually decreasing the pH from 12.0 or more to a range of 9.0 to 11.0, and step (S2') may be performed while maintaining the pH within a range of 9.0 to 11.0 after gradually decreasing the pH from a range of 11.5 to 11.7 to a range of 9.0 to 11.0. As described above, the method of preparing the positive electrode active material precursor according to the present invention may easily provide the positive electrode active material precursor according to the present invention by appropriately adjusting the pH and the introduction or non-introduction of the ammonium ion-containing solution.

The method (2) of preparing the positive electrode active material precursor is a preparation method suitable for preparing the positive electrode active material precursor including the composite transition metal hydroxide having the composition represented by Formula 2.

**Step (S1')**

Step (S1') is a step of performing a co-precipitation reaction while introducing a transition metal-containing solution and a basic aqueous solution into a reactor to form positive electrode active material precursor seeds. In this case, a continuous filtered tank reactor (CFTR) may be used as the reactor. In this case, the transition metal-containing solution and the basic aqueous solution may be introduced continuously.

A nucleus of a positive electrode active material precursor particle in the form of a primary particle is formed while a co-precipitation reaction is initiated by introducing the transition metal-containing solution and the basic aqueous solution, wherein the positive electrode active material precursor seed formed in step (S1') may refer to a seed which is formed by aggregation of the nuclei in the form of a primary particle. An ammonium ion-containing solution is not introduced during the co-precipitation reaction in step (S1').

The transition metal-containing solution may contain cations of at least one metal selected from nickel (Ni), manganese (Mn), cobalt (Co), tungsten (W), molybdenum (Mo), chromium (Cr), and aluminum (Al). The metal ion-containing solution may include acetic acid salts, nitrates, sulfates, halides, sulfides, hydroxides, oxides, or oxyhydroxides of the above metals, and is not particularly limited as long as it is soluble in water.

For example, the cobalt (Co) may be included as $Co(OH)_2$, $CoOOH$, $Co(OCOCH_3)_2 \cdot 4H_2O$, $Co(NO_3)_2 \cdot 6H_2O$, $CoSO_4$, or $Co(SO_4)_2 \cdot 7H_2O$, and any one thereof or a mixture of two or more thereof may be used. In addition, the nickel (Ni) may be included as $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, or a nickel halide, and any one thereof or a mixture of two or more thereof may be used. Also, the manganese (Mn) may be included as manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate, manganese citrate, and a fatty acid manganese salt; a manganese oxyhydroxide, or manganese chloride, and any one thereof or a mixture of two or more thereof may be used.

In a case in which the finally-prepared precursor further includes a second metal element (M) other than nickel (Ni), manganese (Mn), cobalt (Co), tungsten (W), molybdenum (Mo), chromium (Cr), and aluminum (Al) (for example, M is at least one element selected from Zr, Ti, Mg, Ta, and Nb), a raw material containing the second metal element may be optionally further added when preparing the transition metal-containing solution. The raw material containing the second metal element may include an acetic acid salt, nitrate, sulfate, halide, sulfide, hydroxide, oxide, or oxyhydroxide containing the second metal element, and any one thereof or a mixture of two or more thereof may be used. For example, in a case in which the second metal element is Zr, zirconium oxide or the like may be used.

The basic aqueous solution may include at least one selected from a hydrate of alkali metal, a hydroxide of alkali metal, a hydrate of alkaline earth metal, and a hydroxide of alkaline earth metal. For example, the basic aqueous solution may include NaOH, KOH, or $Ca(OH)_2$, and water or a mixture of water and an organic solvent (specifically, alcohol, etc.), which may be uniformly mixed with the water, may be used as a solvent.

According to the present invention, step (S1') may be performed while maintaining a pH within a range of 9.0 to 11.0 after gradually decreasing the pH from 12.0 or more to a range of 9.0 to 11.0 for seed formation. In this case, it may be advantageous for the seed formation. In a case in which the pH is rapidly decreased at an initial stage of the reaction, a particle size grows at a fast rate while a precursor growth reaction proceeds without a sufficient amount of the seed being formed, and there is a problem in that a precursor with different quality from that desired is prepared. The pH may be adjusted with the basic aqueous solution.

According to the present invention, step (S1') may be performed in an oxidizing atmosphere. In this case, since thin primary particles may be formed and voids are appropriately formed in the core portion, density of an active material may be high when the positive electrode active material is prepared by using the finally-prepared positive electrode active material precursor.

**Step (S2')**

Step (S2') is a step of growing positive electrode active material precursor particles in the reactor.

This is a step of preparing a positive electrode active material precursor using the positive electrode active material precursor seeds having a uniform particle size which have been obtained in the reactor through step (S1'), wherein positive electrode active material precursor particles are grown by performing a co-precipitation reaction while introducing a transition metal-containing solution and a basic aqueous solution into the reactor. An ammonium ion-containing solution is not introduced during the co-precipitation reaction in step (S1').

According to the present invention, step (S2') may be performed while maintaining the pH within a range of 9.0 to 11.0 after gradually decreasing the pH from a range of 11.5 to 11.7 to a range of 9.0 to 11.0. In this case, the growth reaction of the precursor seeds formed in step (S1') proceeds and the positive electrode active material precursor according to the present invention may be prepared. In a case in which the final pH is lower than the range of 9.0 to 11.0, there is a problem in that a lot of fine powder is formed, and, in a case in which the final pH is higher than the range of 9.0 to 11.0, since a phenomenon of aggregation of the primary particles occurs, there is a problem in that the positive electrode active material precursor according to the present invention is not prepared. The pH may be adjusted with the basic aqueous solution.

According to the present invention, step (S2') may be performed in an oxidizing atmosphere for controlling optimal primary particle shape and Mn impurity.

The ammonium ion-containing solution may include at least one selected from $NH_4OH$, $(NH_4)_2SO_4$, $NH_4NO_3$, $NH_4Cl$, $CH_3COONH_4$, and $NH_4CO_3$. Water or a mixture of water and an organic solvent (specifically, alcohol, etc.), which may be uniformly mixed with the water, may be used as a solvent.

**Positive Electrode Active Material**

The present invention provides a positive electrode which is a sintered product of a mixture of the positive electrode active material precursor and a lithium raw material. That is, the positive electrode active material may be prepared by mixing the positive electrode active material precursor according to the present invention with the lithium raw material and then sintering the mixture. The positive electrode active material may be a positive electrode active material with high energy density. In addition, since the positive electrode active material is prepared from the positive electrode active material precursor according to the present invention, it has no internal defects and may have low resistance. In a case in which the positive electrode active material precursor is a high-Ni NCM-based positive electrode active material precursor, the positive electrode active material may be a positive electrode active material in the form of a single particle.

The lithium raw material, for example, may include lithium-containing carbonates (e.g., lithium carbonate, etc.), hydrates (e.g., lithium hydroxide hydrate ($LiOH \cdot H_2O$), etc.), hydroxides (e.g., lithium hydroxide, etc.), nitrates (e.g., lithium nitrate ($LiNO_3$), etc.), and chlorides (e.g., lithium chloride (LiCl), etc.), and any one thereof or a mixture of two or more thereof may be used.

The mixing of the positive electrode active material precursor and the lithium raw material may be performed by solid-phase mixing, and a mixing ratio of the positive electrode active material precursor to the lithium raw material may be determined in a range that satisfies an atomic fraction of each component in the finally prepared positive electrode active material. For example, the positive electrode active material precursor and the lithium raw material may be mixed in amounts such that a molar ratio of transition metal included in the positive electrode active material precursor : lithium (Li) is in a range of 1:0.9 to 1:1.2, preferably, 1:0.98 to 1:1.1. In a case in which the positive electrode active material precursor and the lithium raw material are mixed within the above range, a positive electrode active material exhibiting excellent capacity characteristics may be prepared.

The sintering may be performed at 600°C to 1,000°C, preferably, at 700°C to 900°C, and sintering time may be in a range of 5 hours to 30 hours, preferably, 10 hours to 20 hours, but the present invention is not limited thereto.

For example, the positive electrode active material according to the present invention may be prepared by primary mixing the positive electrode active material precursor and the lithium raw material such that a ratio of the total number of moles of transition metals included in the positive electrode active material precursor to the number of moles of lithium included in the lithium raw material is in a range of 1:0.95 to 1:1.00 and primary sintering the mixture at 850°C to 1,000°C for 5 hours to 10 hours to prepare a primary sintered product, and then secondary mixing the primary sintered product and the lithium raw material such that a ratio of the total number of moles of transition metals included in the positive electrode active material precursor to the number of moles of lithium included in the lithium raw material is in a range of 1:0.02 to 1:0.07 and secondary sintering the mixture at 800°C to 850°C for 5 hours to 15 hours. In this case, the prepared positive electrode active material may be in the form of a single particle.

The positive electrode active material may have a composition represented by Formula 3 or Formula 4 below.

$$[\text{Formula 3}] \qquad Li_{x1}[Ni_{a3}Co_{b3}M1_{c3}M2_{d3}]O_2$$

In Formula 3,

M1 is at least one selected from Mn and Al,
M2 is at least one selected from Y, Zr, B, Ti, W, Nb, Sr, Mo, Mg, P, V, Ta, Ga, and Ca, and
$0.9 \leq x1 \leq 1.2$, $0.6 \leq a3 < 1$, $0 < b3 \leq 0.4$, $0 < c3 \leq 0.4$, and $0 \leq d4 \leq 0.2$.
a3 denotes an atomic fraction of nickel among metallic elements in a lithium composite transition metal oxide having the composition represented by Formula 3, wherein a3 may satisfy $0.6 \leq a3 < 1$, $0.8 \leq a3 \leq 0.98$, or $0.85 \leq a3 \leq 0.95$.
b3 denotes an atomic fraction of cobalt among the metallic elements in the lithium composite transition metal oxide having the composition represented by Formula 3, wherein b3 may satisfy $0 < b3 \leq 0.4$, $0.01 \leq b3 \leq 0.2$, or $0.01 \leq b3 \leq 0.15$.
c3 denotes an atomic fraction of M1 element among the metallic elements in the lithium composite transition metal oxide having the composition represented by Formula 3, wherein c3 may satisfy $0 < c3 \leq 0.4$, $0.01 \leq c3 \leq 0.2$, or $0.01 \leq c3 \leq 0.15$.
d3 denotes an atomic fraction of M2 element among the metallic elements in the lithium composite transition metal oxide having the composition represented by Formula 3, wherein d3 may satisfy $0 \leq d3 \leq 0.2$, $0 \leq d3 \leq 0.1$, or $0 \leq d3 \leq 0.05$.

$$[\text{Formula 4}] \qquad Li_{x2}[Mn_{a4}Ni_{b4}Co_{c4}M_{d4}]O_2$$

In Formula 4,

M is at least one selected from Al, Y, Zr, B, Ti, W, Nb, Sr, Mo, Mg, P, V, Ta, Ga, and Ca, and
$0.9 \leq x2 \leq 1.2$, $0.5 \leq a4 < 1$, $0 < b4 \leq 0.5$, $0 \leq c4 < 0.5$, and $0 \leq d4 \leq 0.2$.
a4 denotes an atomic fraction of manganese among metallic elements in the lithium composite transition metal oxide having the composition represented by Formula 4, wherein a4 may satisfy $0.5 \leq a4 < 1$, $0.6 \leq a4 \leq 0.95$, or $0.65 \leq a4 \leq 0.9$.
b4 denotes an atomic fraction of nickel among the metallic elements in the lithium composite transition metal oxide having the composition represented by Formula 4, wherein b4 may satisfy $0 < b4 \leq 0.5$, $0.05 \leq b4 \leq 0.4$, or $0.1 \leq b4 \leq 0.35$.
c4 denotes an atomic fraction of cobalt among the metallic elements in the lithium composite transition metal oxide having the composition represented by Formula 4, wherein c4 may satisfy $0 \leq c4 < 0.5$, $0 \leq c4 \leq 0.2$, or $0 \leq c4 \leq 0.15$.
d4 denotes an atomic fraction of M element among the metallic elements in the lithium composite transition metal oxide having the composition represented by Formula 4, wherein d4 may satisfy $0 \leq d4 \leq 0.2$, $0 \leq d4 \leq 0.1$, or $0 \leq d4 \leq 0.05$.

In a case in which the positive electrode active material has the composition represented by Formula 3, the positive electrode active material may be a positive electrode active material in the form of a single particle. In a case in which the positive electrode active material is the positive electrode active material in the form of a single particle, an average particle diameter ($D_{50}$) may be in a range of 1.0 $\mu$m to 6.0 $\mu$m, may specifically be 1.0 $\mu$m or more, 2.0 $\mu$m or more, 3.0 $\mu$m or more, or 4.0 $\mu$m or more, and may be 5.0 $\mu$m or less or 6.0 $\mu$m or less, and the positive electrode active material may have an angular shape rather than a spherical shape.

In a case in which the positive electrode active material has the composition represented by Formula 4, the positive electrode active material may be a positive electrode active material in the form of a secondary particle. In a case in which the positive electrode active material is the positive electrode active material in the form of a secondary particle, an average particle diameter ($D_{50}$) may be in a range of 9.0 $\mu$m to 12.0 $\mu$m, may specifically be 9.0 $\mu$m or more, 9.1 $\mu$m or more, 9.2 $\mu$m or more, 9.3 $\mu$m or more, 9.4 $\mu$m or more, 9.5 $\mu$m or more, 9.6 $\mu$m or more, 9.7 $\mu$m or more, 9.8 $\mu$m or more, or 9.9 $\mu$m or more, and may be 10.0 $\mu$m or less, 10.5 $\mu$m or less, 11.0 $\mu$m or less, 11.5 $\mu$m or less, or 12.0 $\mu$m or less, and the positive electrode active material may have a spherical shape.

**Positive Electrode**

The present invention provides a positive electrode including the positive electrode active material.

The positive electrode may include a positive electrode collector and a positive electrode active material layer which is formed on the positive electrode collector, wherein the positive electrode active material layer may include the positive electrode active material.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary. In this case, the positive electrode active material may be included in an amount of 80 wt% to 99 wt%, more specifically, 85 wt% to 98.5 wt% based on a total weight of the positive electrode active material layer, and may exhibit excellent capacity characteristics within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the above-described positive electrode active material as well as optionally the binder, the conductive agent, and a dispersant, if necessary, in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

**Lithium Secondary Battery**

The present invention provides a lithium secondary battery including the positive electrode; a negative electrode; a separator disposed between the positive electrode and the negative electrode, and an electrolyte.

The lithium secondary battery may further optionally include a battery container accommodating an electrode assembly of the positive electrode, the negative electrode, and the separator, and a sealing member sealing the battery container.

The negative electrode may include a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

The binder of the negative electrode active material layer is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent of the negative electrode active material layer is a component for further improving conductivity of the negative electrode active material, wherein the conductive agent may be included in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$ $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

Since the lithium secondary battery including the positive electrode active material according to the present invention exhibits excellent capacity characteristics, initial efficiency, resistance characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

## MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Example 1**

NiSO$_4$, CoSO$_4$, and MnSO$_4$ were introduced into distilled water in amounts such that a molar ratio of Ni:Co:Mn was 88.5:3.5:8.0 to prepare a transition metal-containing solution with a concentration of 2.4 M. Also, a NaOH aqueous solution with a concentration of 7.96 M and a NH$_4$OH aqueous solution with a concentration of 5.08 M were prepared.

As illustrated in FIG. 1, a container containing the transition metal-containing solution, a container containing the NaOH aqueous solution, and a container containing the NH$_4$OH aqueous solution were respectively connected to a 100 L reactor.

After 28.59 L of deionized water, 0.035 L of the NaOH aqueous solution, and 0.216 L of the NH$_4$OH aqueous solution were introduced into the reactor, dissolved oxygen in the water was removed by purging the reactor with nitrogen gas to create a non-oxidizing atmosphere in the reactor.

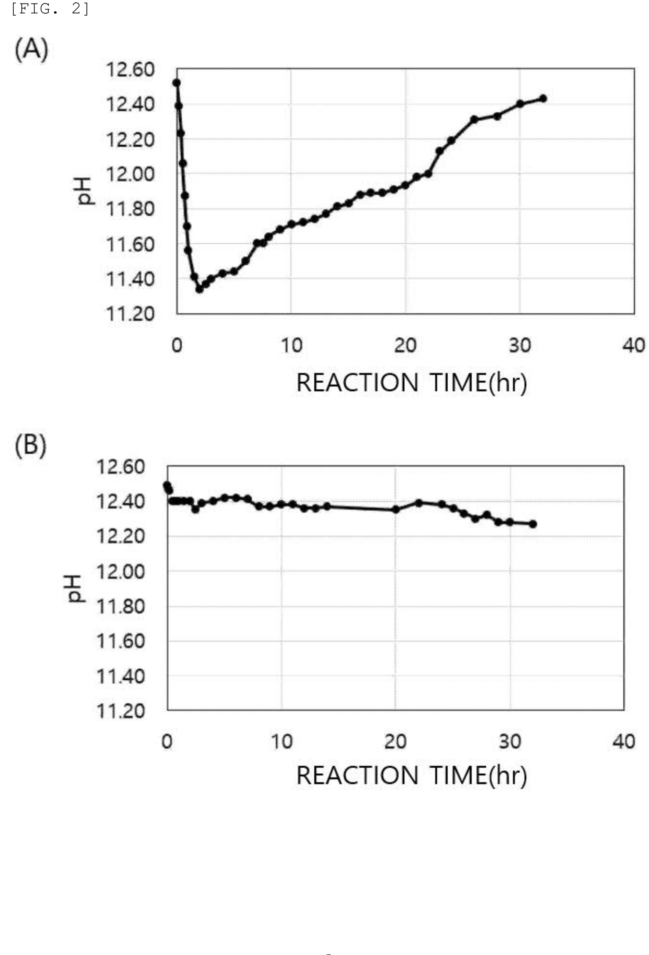

Thereafter, the transition metal-containing solution and the NH$_4$OH aqueous solution were continuously added to the reactor at rates of 7.26 L/hr and 1.03 L/hr, respectively, and at the same time, in order to gradually decrease a pH as shown in FIG. 2(A), a co-precipitation reaction was performed for 1.5 hours while the NaOH aqueous solution was added with a pH sensor being involved such that positive electrode active material precursor seeds were formed and a continuous grinder was simultaneously operated to repeat a process of discharging the positive electrode active material precursor seeds at a rate of 1,000 L/hr ([reactor capacity $\times$ 10]/[hr]) from the reactor to the continuous grinder and reintroducing the positive electrode active material precursor seeds from the continuous grinder into the reactor at a rate of 1,000 L/hr ([reactor capacity $\times$ 10]/[hr]).

Thereafter, the transition metal-containing solution and the NH$_4$OH aqueous solution were continuously added to the reactor at rates of 7.26 L/hr and 1.03 L/hr, respectively, and at the same time, in order to gradually increase a pH as shown in FIG. 2(A), a co-precipitation reaction was performed for 4.5 hours while the NaOH aqueous solution was added with a pH sensor being involved such that positive electrode active material precursor particles were grown and a continuous grinder was simultaneously operated to repeat a process of discharging the positive electrode active material precursor seeds at a rate of 1,000 L/hr ([reactor capacity $\times$ 10]/[hr]) from the reactor to the continuous grinder and reintroducing the positive electrode active material precursor seeds from the continuous grinder into the reactor at a rate of 1,000 L/hr ([reactor capacity $\times$ 10]/[hr]).

Thereafter, the operation of the continuous grinder was stopped, and the transition metal-containing solution and the NH$_4$OH aqueous solution were continuously added to the reactor at rates of 7.26 L/hr and 1.03 L/hr, respectively, and at the same time, in order to gradually increase a pH as shown in FIG. 2(A), while the NaOH aqueous solution was added with a pH sensor being involved, a co-precipitation reaction was performed for a total reaction time of 32 hours to grow the positive electrode active material precursor particles. For reference, when the 100 L reactor was full, a filtration system located in the reactor was operated to continuously introduce the transition metal-containing solution, the NH$_4$OH aqueous solution, and the NaOH aqueous solution while continuously discharging a solvent after completion of the reaction to the outside of the reactor.

An overall composition of the positive electrode active material precursor particles thus prepared was Ni$_{0.885}$Co$_{0.035}$Mn$_{0.08}$(OH)$_2$, and an average particle diameter (D$_{50}$) was 3.38 $\mu$m.

**Example 2**

MnSO$_4$ and NiSO$_4$ were introduced into distilled water in amounts such that a molar ratio of Mn:Ni was 65:35 to prepare a transition metal-containing solution with a concentration of 2.4 M. Also, a NaOH aqueous solution with a concentration of 25 wt% and a NH$_4$OH aqueous solution with a concentration of 9 M were prepared.

A container containing the transition metal-containing solution and a container containing the NaOH aqueous solution were respectively connected to a 100 L CFTR reactor 1.

40 L of deionized water, 50 mL of the NaOH aqueous solution, and 52 mL of the NH$_4$OH aqueous solution were introduced into the CFTR reactor 1 to adjust a pH to 12, and dissolved oxygen in the water was removed by purging the reactor with nitrogen gas to create a non-oxidizing atmosphere in the reactor.

Thereafter, nitrogen and oxygen were introduced into the CFTR reactor 1 at a volume ratio of 10:0.2 to create a weak oxidizing atmosphere, and the transition metal-containing solution was continuously introduced into the reactor 1 at a rate of 4.16 L/hr. In this case, while the NaOH aqueous solution together with the transition metal-containing solution was added with a pH sensor being involved, a co-precipitation reaction was performed for 20 hours to form positive electrode active material precursor seeds, and the NaOH aqueous solution was added in an amount such that the pH was gradually decreased from 12 to 10 for 2 hours from the time of adding the transition metal-containing solution and the pH was maintained at 10 for 18 hours thereafter.

When the CFTR reactor 1 was full, a filtration system located in the reactor was operated to continuously discharge a solvent after completion of the reaction to the outside of the reactor, and a co-precipitation reaction was performed while continuously introducing the transition metal-containing solution and the NaOH aqueous solution at the same time.

An average particle diameter ($D_{50}$) of the positive electrode active material precursor seeds formed through the reaction was 4.0 $\mu$m, and an average cross-sectional area of primary particles was 0.0194 $\mu$m$^2$.

A container containing the transition metal-containing solution and a container containing the NaOH aqueous solution were respectively connected to a 100 L CFTR reactor 2.

Thereafter, 3.2 kg of the prepared positive electrode active material precursor seeds, 45 L of deionized water, and 1.8 L of the NH$_4$OH aqueous solution were introduced into the CFTR reactor 2 to adjust a pH to a range of 11.5 to 11.6, and dissolved oxygen in the water was removed by purging the reactor with nitrogen gas to create a non-oxidizing atmosphere in the reactor.

Thereafter, nitrogen and oxygen were introduced into the CFTR reactor 2 at a volume ratio of 10:0.2 to create a weak oxidizing atmosphere, and the transition metal-containing solution was continuously introduced into the reactor 2 at a rate of 8.33 L/hr. In this case, while the NaOH aqueous solution together with the transition metal-containing solution was added with a pH sensor being involved, a co-precipitation reaction was performed for 26 hours to grow positive electrode active material precursor particles, and the NaOH aqueous solution was added in an amount such that the pH was gradually decreased from a range of 11.5 to 11.6 to 10 for 2 hours from the time of adding the transition metal-containing solution and the pH was maintained at 10 for 24 hours thereafter.

When the CFTR reactor 2 was full, a filtration system located in the reactor was operated to continuously discharge a solvent after completion of the reaction to the outside of the reactor, and a co-precipitation reaction was performed while continuously introducing the transition metal-containing solution and the NaOH aqueous solution at the same time. An overall composition of the positive electrode active material precursor particles thus prepared was Mn$_{0.65}$Ni$_{0.35}$(OH)$_2$, and an average particle diameter ($D_{50}$) was 10.00 $\mu$m.

**Example 3**

MnSO$_4$ and NiSO$_4$ were introduced into distilled water in amounts such that a molar ratio of Mn:Ni was 65:35 to prepare a transition metal-containing solution with a concentration of 2.4 M. Also, a NaOH aqueous solution with a concentration of 25 wt% and a NH$_4$OH aqueous solution with a concentration of 9 M were prepared.

A container containing the transition metal-containing solution and a container containing the NaOH aqueous solution were respectively connected to a 10 L CFTR reactor 1.

5 L of deionized water, 6.3 mL of the NaOH aqueous solution, and 6.4 mL of the NH$_4$OH aqueous solution were introduced into the CFTR reactor to adjust a pH to 12, and dissolved oxygen in the water was removed by purging the reactor with nitrogen gas to create a non-oxidizing atmosphere in the reactor.

Thereafter, nitrogen and oxygen were introduced into the CFTR reactor 1 at a volume ratio of 5:0.04 to create a weak oxidizing atmosphere, and the transition metal-containing solution was continuously introduced into the reactor at a rate of 0.42 L/hr. In this case, while the NaOH aqueous solution together with the transition metal-containing solution was added with a pH sensor being involved, a co-precipitation reaction was performed for 24 hours to form positive electrode active material precursor seeds, and the NaOH aqueous solution was added in an amount such that the pH was gradually decreased from 12 to 10 for 2 hours from the time of adding the transition metal-containing solution and the pH was maintained at 10 for 22 hours thereafter.

When the CFTR reactor 1 was full, a filtration system located in the reactor was operated to continuously discharge a solvent after completion of the reaction to the outside of the reactor, and a co-precipitation reaction was performed while continuously introducing the transition metal-containing solution and the NaOH aqueous solution at the same time.

In addition, while the reaction proceeds, an atmosphere in the CFTR reactor was adjusted such that a ratio of nitrogen to oxygen was in a range of 5:0.04 to 5:0.1 until the end of the reaction to obtain a desired primary particle shape.

An average particle diameter ($D_{50}$) of the positive electrode active material precursor seeds formed through the reaction was 4.0 $\mu$m, and an average cross-sectional area of primary particles was 0.0199 $\mu$m$^2$.

A container containing the transition metal-containing solution and a container containing the NaOH aqueous solution were respectively connected to a 10 L CFTR reactor 2.

Thereafter, 0.32 kg of the prepared positive electrode active material precursor seeds, 6 L of deionized water, and 1.45 mL of the NH$_4$OH aqueous solution were introduced into the CFTR reactor 2 to adjust a pH to a range of 11.5 to 11.6, and dissolved oxygen in the water was removed by purging the reactor with nitrogen gas to create a non-oxidizing atmosphere in the reactor.

Thereafter, nitrogen and oxygen were introduced into the CFTR reactor 2 at a volume ratio of 5:0.04 to create a weak oxidizing atmosphere, and the transition metal-containing solution was continuously introduced into the reactor at a rate of 0.83 L/hr. In this case, while the NaOH aqueous solution together with the transition metal-containing solution was added with a pH sensor being involved, a co-precipitation reaction was performed for 20 hours to grow positive electrode active material precursor particles, and the NaOH aqueous solution was added in an amount such that the pH was gradually decreased from a range of 11.5 to 11.6 to 10 for 2 hours from the time of adding the transition metal-containing solution and the pH was maintained at 10 for 18 hours thereafter.

When the CFTR reactor 2 was full, a filtration system located in the reactor was operated to continuously discharge a solvent after completion of the reaction to the outside of the reactor, and a co-precipitation reaction was performed while continuously introducing the transition metal-containing solution and the NaOH aqueous solution at the same time.

An overall composition of the positive electrode active material precursor particles thus prepared was $Mn_{0.65}Ni_{0.35}(OH)_2$, and an average particle diameter ($D_{50}$) was 9.95 $\mu$m.

**Comparative Example 1**

$NiSO_4$, $CoSO_4$, and $MnSO_4$ were introduced into distilled water in amounts such that a molar ratio of Ni:Co:Mn was 88.5:3.5:8.0 to prepare a transition metal-containing solution with a concentration of 2.4 M. Also, a NaOH aqueous solution with a concentration of 7.96 M and a $NH_4OH$ aqueous solution with a concentration of 5.08 M were prepared.

As illustrated in FIG. 1, a container containing the transition metal-containing solution, a container containing the NaOH aqueous solution, and a container containing the $NH_4OH$ aqueous solution were respectively connected to a 100 L reactor.

After 28.59 L of deionized water, 0.035 L of the NaOH aqueous solution, and 0.216 L of the $NH_4OH$ aqueous solution were introduced into the reactor, dissolved oxygen in the water was removed by purging the reactor with nitrogen gas to create a non-oxidizing atmosphere in the reactor.

Thereafter, the transition metal-containing solution and the $NH_4OH$ aqueous solution were continuously added to the reactor at rates of 7.26 L/hr and 1.03 L/hr, respectively, and at the same time, in order to adjust a pH as shown in FIG. 2(B), while the NaOH aqueous solution was added with a pH sensor being involved, a co-precipitation reaction was performed for 1.5 hours to form positive electrode active material precursor seeds. Subsequently, when the 100 L reactor was full, a filtration system located in the reactor was operated to continuously discharge a solvent after completion of the reaction to the outside of the reactor, and a co-precipitation reaction was performed for a total reaction time of 32 hours to grow positive electrode active material precursor particles while continuously introducing the transition metal-containing solution, the $NH_4OH$ aqueous solution, and the NaOH aqueous solution.

**Comparative Example 2**

$MnSO_4$ and $NiSO_4$ were introduced into distilled water in amounts such that a molar ratio of Mn:Ni was 65:35 to prepare a transition metal-containing solution with a concentration of 2.4 M. Also, a NaOH aqueous solution with a concentration of 25 wt% and a $NH_4OH$ aqueous solution with a concentration of 9 M were prepared.

A container containing the transition metal-containing solution and a container containing the NaOH aqueous solution were respectively connected to a 10 L CFTR reactor.

3.6 L of deionized water and 325 mL of the NaOH aqueous solution were introduced into the CFTR reactor to adjust a pH to 11, and dissolved oxygen in the water was removed by purging the reactor with nitrogen gas to create a non-oxidizing atmosphere in the reactor.

Thereafter, nitrogen gas was introduced into the CFTR reactor to create a non-oxidizing atmosphere, and the transition metal-containing solution was continuously introduced into the reactor at a rate of 0.82 L/hr. In this case, while the NaOH aqueous solution together with the transition metal-containing solution was added with a pH sensor being involved, a co-precipitation reaction was performed for 43 hours to form a positive electrode active material precursor, and the NaOH aqueous solution was added in an amount such that the pH was gradually decreased from 11 to 10 for 2 hours from the time of adding the transition metal-containing solution and the pH was maintained at 10.5 for 41 hours thereafter.

When the CFTR reactor was full, a filtration system located in the reactor was operated to continuously discharge a solvent after completion of the reaction to the outside of the reactor, and a co-precipitation reaction was performed while continuously introducing the transition metal-containing solution and the NaOH aqueous solution at the same time.

An overall composition of the positive electrode active material precursor particles thus prepared was $Mn_{0.65}Ni_{0.35}(OH)_2$, and an average particle diameter ($D_{50}$) was 11.9 $\mu$m.

**Experimental Example 1**

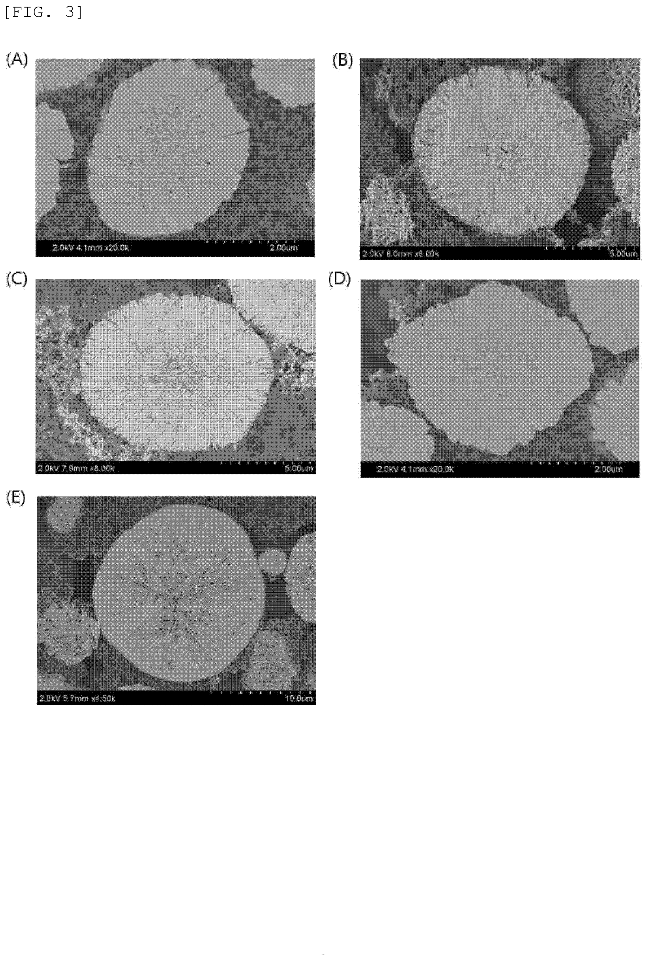

Each of the positive electrode active material precursors prepared in Examples 1 to 3 and Comparative Examples 1 and 2 was cut at a power of 6 KeV using an ion milling machine to obtain a cross-sectional sample, and a cross-sectional SEM image was obtained using a scanning electron microscope (SEM). FIG. 3 is cross-sectional SEM images of the positive electrode active material precursors prepared in Examples 1 to 3 and Comparative Examples 1 and 2. Specifically, FIGS. 3(A), 3(B), 3(C), 3(D), and 3(E) are the cross-sectional SEM images of the positive electrode active material precursors prepared in Example 1, Example 2, Example 3, Comparative Example 1, and Comparative Example 2, respectively.

An average cross-sectional area (A1) of primary particles of a core portion and an average cross-sectional area (A2) of primary particles of a shell portion of each of the positive electrode active material precursors prepared in the examples and the comparative examples were obtained by analyzing the cross-sectional SEM images using Image J, and values thereof are presented in Table 1 below. In addition, a ratio (A2/A1) of the average cross-sectional area of the primary particles of the shell portion to the average cross-sectional area of the primary particles of the core portion was calculated and presented in Table 1 below.

In this case, the average cross-sectional area of the primary particles is an average cross-sectional area of one primary particle, wherein it is a value obtained by dividing a total cross-sectional area of tens to hundreds of primary particles by the number of primary particles.

[Table 1]

| Category | Average cross-sectional area (A1) of primary particles of core portion ($\mu m^2$) | Average cross-sectional area (A2) of primary particles of shell portion ($\mu m^2$) | A2/A1 |
|---|---|---|---|
| Example 1 | 0.0149 | 0.0695 | 4.660 |
| Example 2 | 0.0194 | 0.0846 | 4.360 |
| Example 3 | 0.0199 | 0.0900 | 4.522 |
| Comparative Example 1 | 0.0191 | 0.0402 | 2.100 |
| Comparative Example 2 | 0.1525 | 0.1074 | 0.704 |

**Experimental Example 2**

Each of the positive electrode active material precursors prepared in the examples and the comparative examples was cut at a power of 6 KeV using an ion milling machine to obtain a cross-sectional sample, and a cross-sectional SEM image was obtained using a scanning electron microscope (SEM).

The cross-sectional SEM images were analyzed using Image J, and thus, a percentage (%) of a cross-sectional area of all pores in a core portion to a cross-sectional area of the core portion, a percentage (%) of a cross-sectional area of all pores in a shell portion to a cross-sectional area of the shell portion, and a percentage (%) value of the cross-sectional area of the core portion to a cross-sectional area of the positive electrode active material precursor are presented in Table 2 below.

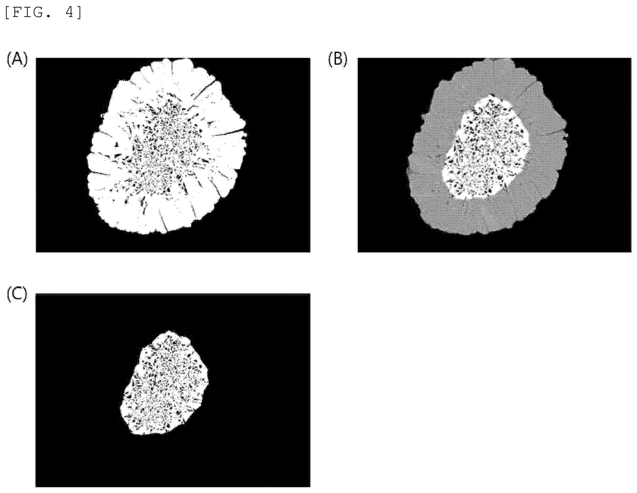

FIGS. 4(A) to 4(C) are images obtained by analyzing FIG. 3(A) using Image J, wherein (A) is an image to obtain a percentage of a cross-sectional area of all pores present in the positive electrode active material precursor to a total cross-sectional area of the positive electrode active material precursor, (B) is an image to obtain the percentage of the cross-sectional area of the core portion to the cross-sectional area of the positive electrode active material precursor, and (C) is an image to obtain the percentage of the cross-sectional area of the all pores present in the core portion to the cross-sectional area of the core portion.

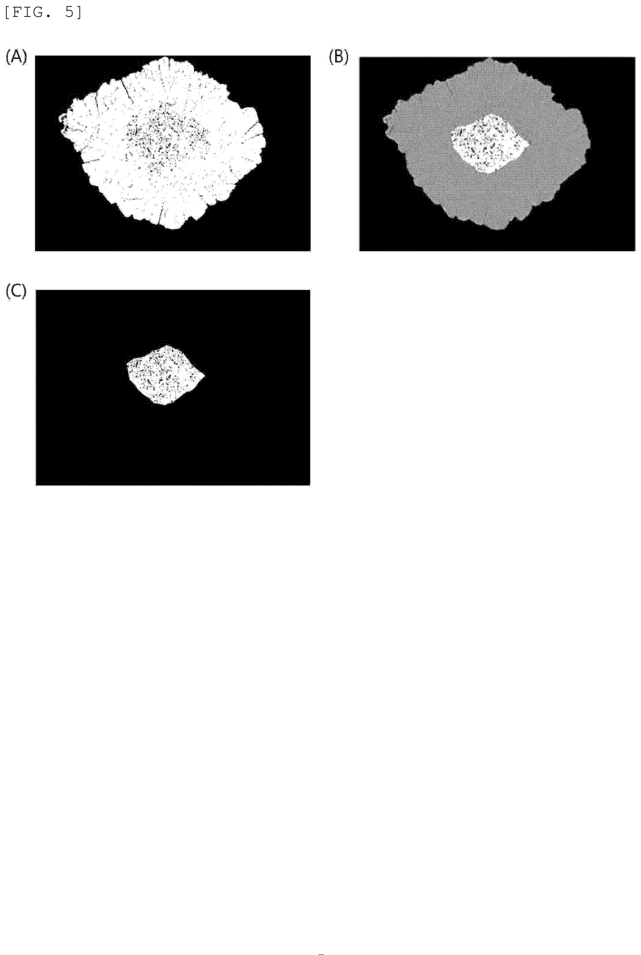

FIGS. 5(A) to 5(C) are images obtained by analyzing FIG. 3(A) using Image J, wherein (A) is an image to obtain a percentage of a cross-sectional area of all pores present in the positive electrode active material precursor to a total cross-sectional area of the positive electrode active material precursor, (B) is an image to obtain the percentage of the cross-sectional area of the core portion to the cross-sectional area of the positive electrode active material precursor, and (C) is an image to obtain the percentage of the cross-sectional area of the all pores present in the core portion to the cross-sectional area of the core portion.

For reference, the percentage (%) of the cross-sectional area of all pores present in the core portion to the cross-sectional area of the core portion is a value which was calculated by subtracting the percentage (%) of the cross-sectional area of the all pores present in the shell portion to the cross-sectional area of the shell portion from the percentage (%) of the cross-sectional area of the all pores present in the positive electrode active material precursor to the total cross-sectional area of the positive electrode active material precursor.

[Table 2]

| Category | Percentage (C) of cross-sectional area of all pores present in core portion to cross-sectional area of the core portion (%) | Percentage (S) of cross-sectional area of all pores present in shell portion to cross-sectional area of the shell portion (%) | (C-S) (%) | Percentage of the cross-sectional area of the core portion to cross-sectional area of the positive electrode active material precursor (%) |
|---|---|---|---|---|
| Example 1 | 14.11 | 4.58 | 9.53 | 31.28 |
| Example 2 | 16.06 | 6.21 | 9.84 | 9.33 |
| Example 3 | 11.54 | 6.03 | 5.24 | 6.38 |
| Comparative Example 1 | 9.14 | 3.04 | 6.10 | 13.46 |
| Comparative Example 2 | 33.26 | 5.22 | 28.04 | 26.02 |

**Experimental Example 3**

1) Check Span Values of the Positive Electrode Active Material Precursors

$D_5$, $D_{50}$, and $D_{95}$ of each of the positive electrode active material precursors of Examples 1 to 3 and Comparative Examples 1 and 2 were measured using a particle size analyzer (S-3500, Microtrac), and span values of the positive electrode active material precursors were calculated according to Equation 4 below and presented in Table 3 below.

$$[Equation\ 4]$$

$$Span = (D_{95}-D_5)/D_{50}$$

2) Check Ratio of Abnormal Particles, and Aspect Ratio and Circularity of Particles

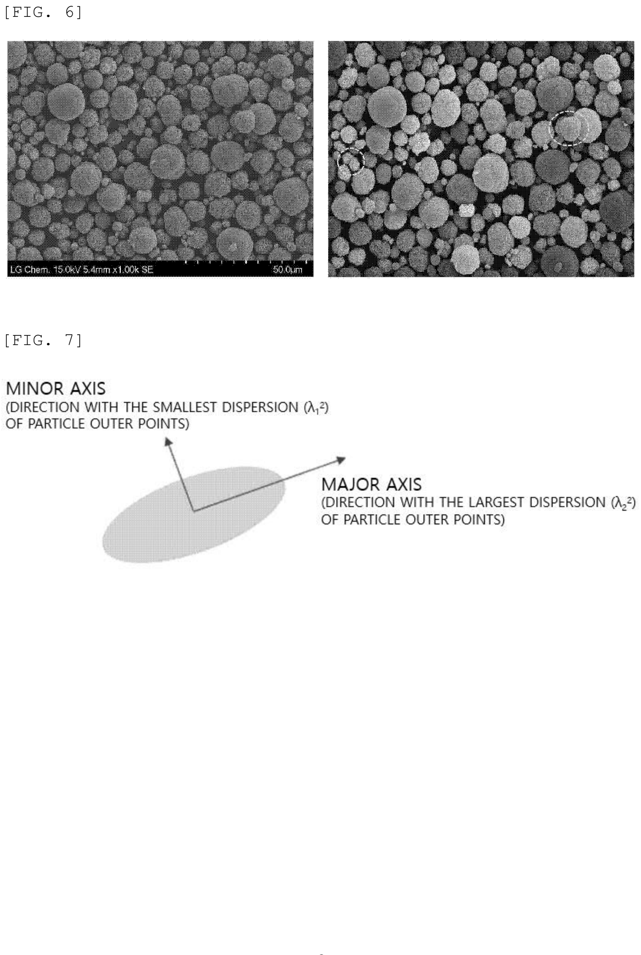

A ratio of abnormal particles, and aspect ratio and circularity of particles may be measured from a segmentation image divided for each secondary particle unit which was obtained by image processing a scanning electron microscope (SEM) image using an artificial intelligence model. To explain this, (A) an SEM image and (B) a segmentation image obtained by image processing the SEM image are illustrated in FIG. 6. After obtaining the scanning electron microscope (SEM) image of positive electrode material powder to be measured, the segmentation image may be obtained by inputting the obtained scanning electron microscope image into a U-NET structure to generate a binary image, then converting the binary image into a distance-converted image based on a distance conversion algorithm, filtering the binary image using a threshold set based on the distance-converted image, identifying a plurality of objects included in the filtered binary image, and then segmenting the SEM image into secondary particle units based on the plurality of objects.

In a case in which two or more particles rather than a spherical secondary particle are aggregated and attached as indicated by a dotted circle in the segmentation image of FIG. 6(B), it was allowed to be recognized as an abnormal particle, and a ratio of the number of abnormal particles to the total number of particles was confirmed and presented in Table 3 below.

In addition, a minor axis and a major axis were set for each secondary particle unit in the segmentation image as shown in an image of FIG. 7, and an aspect ratio was calculated according to Equation 5 below and presented in Table 3 below. FIG. 7 is a view illustrating definitions of the minor axis and the major axis for calculating the aspect ratio of the particle.

$$[Equation\ 5]$$

$$Aspect\ ratio = \sqrt{\frac{major\ axis\ dispersion}{minor\ axis\ dispersion}} = \sqrt{\frac{\lambda_1^2}{\lambda_2^2}}$$

Also, circularity was calculated for each secondary particle unit in the segmentation image according to Equation 6 below and presented in Table 3 below.

[Equation 6]

$$\text{Circularity} = 4\pi A/P^2$$

In Equation 6, A is an area of each secondary particle measured in the segmentation image, and P is a perimeter of each secondary particle measured in the segmentation image.

For reference, with respect to the aspect ratio and the circularity, it may be considered that sphericity is excellent as each of the aspect ratio and circularity is closer to 1.0.

[Table 3]

| Category | Span | Abnormal particle (%) | Aspect ratio | Circularity |
|---|---|---|---|---|
| Example 1 | 0.96 | - | 1.3174 | 0.8466 |
| Example 2 | 0.58 | 3.1833 | 1.1388 | 0.8731 |
| Example 3 | 0.58 | 4.5600 | 1.1472 | 0.8196 |
| Comparative Example 1 | 1.32 | - | 1.3533 | 0.8090 |
| Comparative Example 2 | 0.85 | 19.3400 | 1.2956 | 0.7215 |

Referring to Table 3, with respect to the high-Ni NCM-based positive electrode active material precursor of Example 1, it may be confirmed that it had a smaller span value than the high-Ni NCM-based positive electrode active material precursor of Comparative Example 1 and had aspect ratio and circularity close to 1. In addition, with respect to the Mn-rich NCM-based positive electrode active material precursors of Examples 2 and 3, it may be confirmed that it had a smaller span value than the Mn-rich NCM-based positive electrode active material precursor of Comparative Example 2 and not only had the less number of abnormal particles, but also had aspect ratio and circularity close to 1.

Accordingly, it may be confirmed that the positive electrode active material precursor according to the present invention had a uniform particle size and excellent sphericity.

**Experimental Example 4**

Each of the positive electrode active material precursors of Example 1 and Comparative Example 1 and LiOH were mixed such that a molar ratio of the total number of moles of transition metals (Ni+Co+Mn) included in the positive electrode active material precursor to the number of moles of lithium included in the LiOH was 1:0.98, and the mixture was primarily sintered at 895°C for 6 hours to prepare a primary sintered product. The primary sintered product and LiOH were mixed such that a molar ratio of the total number of moles of transition metals (Ni+Co+Mn) included in the positive electrode active material precursor to lithium included in the LiOH was 1:0.04, and the mixture was secondarily sintered at 820°C for 9 hours to prepare a lithium composite transition metal oxide (positive electrode active material) in the form of a single particle having an average particle diameter of 4.8 $\mu$m.

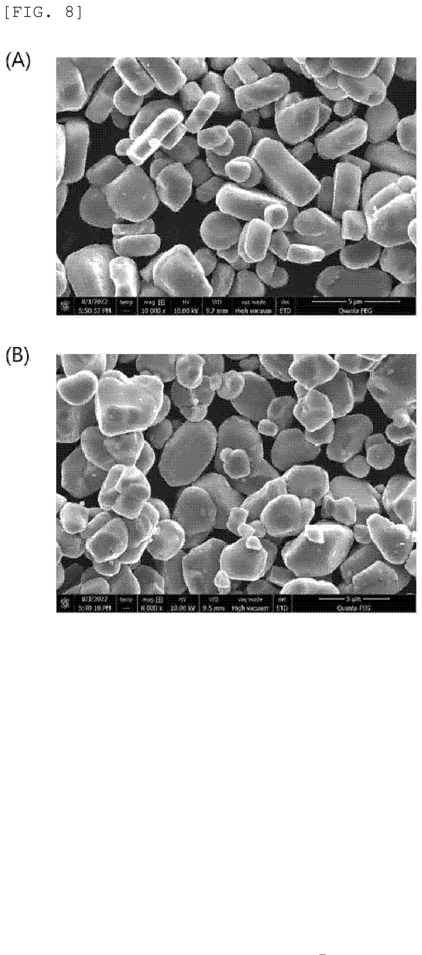

FIG. 8 illustrates (A) an SEM image of the positive electrode active material prepared by using the positive electrode active material precursor of Example 1, and (B) an SEM image of the positive electrode active material prepared by using the positive electrode active material precursor of Comparative Example 1.

Each of the positive electrode active materials prepared by the above-described method, a conductive agent (carbon black), and a binder (PVdF) were mixed in an N-methyl-2-pyrrolidone (NMP) solvent in a weight ratio of 95:2:3 to prepare a positive electrode slurry. One surface of an aluminum current collector was coated with the positive electrode slurry, dried at 130°C, and then rolled to prepare each positive electrode.

After an electrode assembly was prepared by disposing a separator between the positive electrode and the negative electrode which had been prepared as described above, the electrode assembly was disposed in a battery case, and an electrolyte solution was then injected into the battery case to prepare a 2032 type coin cell lithium secondary battery.

In this case, a lithium (Li) metal disk was used as the negative electrode, and as the electrolyte solution, an electrolyte solution, in which 1 M LiPF$_6$ was dissolved in an organic solvent in which ethylene carbonate:ethyl methyl carbonate:diethyl carbonate were mixed in a volume ratio of 3:3:4, was used.

Each lithium secondary battery prepared as described above was charged at a constant current of 0.2 C to 4.25 V in a constant current/constant voltage (CC/CV) mode (CV 0.05 C) at 25°C, and then discharged at a constant current of 0.2 C to 2.5 V in a CC mode to measure initial charge capacity and discharge capacity. Measurement results are presented in Table 4 below.

Also, each lithium secondary battery prepared as described above was charged at a constant current of 0.1 C to 4.4 V in a CC/CV mode (CV 0.05 C) at 45°C, and then discharged at a constant current of 0.1 C to 2.5 V in a CC mode. Thereafter, CC/CV mode charging (CV 0.05C) at a constant current of 0.5 C to 4.4 V and then CC mode discharging at a constant current of 1.0 C to 2.5 V were set as 1 cycle, and the cycle was repeated 50 times. In this case, a percentage of DCIR, which was obtained by dividing a voltage drop ($\Delta$V) for 60 seconds in a 50th discharge cycle by the current, to DCIR, which was obtained by dividing a voltage drop ($\Delta$V) for 60 seconds in a 1st discharge cycle by the current, was defined as a resistance increase rate and the resistance increase rates are presented in Table 4 below.

[Table 4]

| Category | Charge capacity (mAh/g) | Discharge capacity (mAh/g) | Capacity retention at 45°C (%) | $\Delta$DCIR at 45°C (%) |
|---|---|---|---|---|
| Example 1 | 230.1 | 201.7 | 96.37 | 155 |
| Comparative Example 1 | 230.0 | 201.8 | 96.07 | 166 |

Referring to Table 4, with respect to the battery including the positive electrode active material which was prepared by using the positive electrode active material precursor of Example 1, it may be confirmed that it had higher capacity retention and significantly lower resistance increase rate than the battery including the positive electrode active material which was prepared by using the positive electrode active material precursor of Comparative Example 1 in which the ratio of the average cross-sectional area of the primary particles in the shell portion to the average cross-sectional area of the primary particles in the core portion was small, at less than 3.00.

Thus, among the positive electrode active material precursors according to the present invention, it may be understood that the high-Ni NCM-based positive electrode active material precursor may easily form a positive electrode active material in the form of a single particle with a high degree of single-particle formation when the mixture of the positive electrode active material precursor and the lithium-containing raw material was sintered, and may provide a positive electrode active material which may achieve a battery with excellent capacity characteristics and resistance characteristics due to easy diffusion of lithium into the core portion.

[Description of the Symbols]

100: Reactor
200: Continuous Grinder

**Claims**

1. A positive electrode active material precursor comprising a composite transition metal hydroxide which includes:

   a core portion including first primary particles; and
   a shell portion formed on the core portion and including second primary particles,
   wherein, in a cross section of the positive electrode active material precursor, a ratio (A2/A1) of an average cross-sectional area (A2) of the second primary particles to an average cross-sectional area (A1) of the first primary particles is in a range of 3.00 to 10.0.

2. The positive electrode active material precursor of claim 1, wherein the positive electrode active material precursor has an average particle diameter ($D_{50}$) of 2.0 $\mu$m to 11.0 $\mu$m.

3. The positive electrode active material precursor of claim 1, wherein the core portion is in a form of a spherical secondary particle that is formed by aggregation of the first primary particles.

4. The positive electrode active material precursor of claim 1, wherein the composite transition metal hydroxide has a composition represented by Formula 1:

   [Formula 1]     $[Ni_{a1}Co_{b1}M1_{c1}M2_{d1}](OH)_2$

wherein, in Formula 1,

M1 is at least one selected from manganese (Mn) and aluminum (Al),
M2 is at least one selected from yttrium (Y), zirconium (Zr), boron (B), titanium (Ti), tungsten (W), niobium (Nb), strontium (Sr), molybdenum (Mo), magnesium (Mg), phosphorus (P), vanadium (V), tantalum (Ta), gallium (Ga), and calcium (Ca), and
$0.6 \leq a1 < 1$, $0 < b1 \leq 0.4$, $0 < c1 \leq 0.4$, and $0 \leq d1 \leq 0.2$.

5. The positive electrode active material precursor of claim 1, wherein the composite transition metal hydroxide has a composition represented by Formula 2:

$$[\text{Formula 2}] \qquad [Mn_{a2}Ni_{b2}Co_{c2}M_{d2}](OH)_2$$

wherein, in Formula 2,

M is at least one selected from Al, Y, Zr, B, Ti, W, Nb, Sr, Mo, Mg, P, V, Ta, Ga, and Ca, and
$0.5 \leq a2 < 1$, $0 < b2 \leq 0.5$, $0 \leq c2 < 0.5$, and $0 \leq d2 \leq 0.2$.

6. The positive electrode active material precursor of claim 4, wherein, in the cross section of the positive electrode active material precursor, the ratio (A2/A1) of the average cross-sectional area (A2) of the second primary particles to the average cross-sectional area (A1) of the first primary particles is in a range of 4.60 to 5.00, and an average particle diameter ($D_{50}$) is in a range of 2.00 $\mu$m to 5.00 $\mu$m.

7. The positive electrode active material precursor of claim 5, wherein, in the cross section of the positive electrode active material precursor, the ratio (A2/A1) of the average cross-sectional area (A2) of the second primary particles to the average cross-sectional area (A1) of the first primary particles is in a range of 3.00 to 4.60, and an average particle diameter ($D_{50}$) is in a range of 9.50 $\mu$m to 11.00 $\mu$m.

8. The positive electrode active material precursor of claim 1, wherein the average cross-sectional area (A1) of the first primary particles is in a range of 0.0100 $\mu$m$^2$ to 0.0200 $\mu$m$^2$.

9. The positive electrode active material precursor of claim 1, wherein the average cross-sectional area (A2) of the second primary particles is in a range of 0.0500 $\mu$m$^2$ to 0.1000 $\mu$m$^2$.

10. The positive electrode active material precursor of claim 1, wherein, in the cross section of the positive electrode active material precursor, a percentage of a cross-sectional area of all pores present in the core portion to a cross-sectional area of the core portion is in a range of 11.00% to 30.00%.

11. The positive electrode active material precursor of claim 1, wherein, in the cross section of the positive electrode active material precursor, a percentage of a cross-sectional area of all pores present in the shell portion to a cross-sectional area of the shell portion is in a range of 2.00% to 7.00%.

12. The positive electrode active material precursor of claim 1, wherein, in the cross section of the positive electrode active material precursor, a difference (C-S) between a percentage (C) of a cross-sectional area of all pores present in the core portion to a cross-sectional area of the core portion and a percentage (S) of a cross-sectional area of all pores present in the shell portion to a cross-sectional area of the shell portion is in a range of 5.00% to 28.00%.

13. The positive electrode active material precursor of claim 1, wherein, in the cross section of the positive electrode active material precursor, a percentage of a cross-sectional area of the core portion to a cross-sectional area of the positive electrode active material precursor is in a range of 5.00% to 50.00%.

14. A method of preparing the positive electrode active material precursor of claim 1 using a reaction apparatus connected to a reactor and a continuous grinder, the method comprising steps of:

(S1) introducing a transition metal-containing solution, an ammonium ion-containing solution, and a basic aqueous solution into the reactor to form positive electrode active material precursor seeds through a co-precipitation reaction, and simultaneously operating the continuous grinder to repeat a process of discharging the positive electrode active material precursor seeds from the reactor into the continuous grinder and reintroducing the positive electrode active material precursor seeds from the continuous grinder into the reactor; and
(S2) stopping the operation of the continuous grinder, and growing positive electrode active material precursor particles in the reactor,
wherein step (S1) is performed while gradually decreasing a pH, and
step (S2) is performed while gradually increasing the pH.

15. The method of claim 14, wherein step (S1) is performed while gradually decreasing the pH within a range of 12.6 to 11.2.

16. The method of claim 14, wherein step (S2) is performed while gradually increasing the pH within a range of 11.2 to 12.6.

17. A method of preparing the positive electrode active material precursor of claim 1, the method comprising steps of:

(S1') introducing a transition metal-containing solution and a basic aqueous solution into a reactor to form positive electrode active material precursor seeds through a co-precipitation reaction; and
(S2') introducing a transition metal-containing solution and a basic aqueous solution into the reactor containing the positive electrode active material precursor seeds to grow positive electrode active material precursor particles through a co-precipitation reaction,
wherein step (S1') is performed while maintaining a pH within a range of 9.0 to 11.0 after gradually decreasing the pH from 12.0 or more to a range of 9.0 to 11.0, and
step (S2') is performed while maintaining the pH within a range of 9.0 to 11.0 after gradually decreasing the pH from a range of 11.5 to 11.7 to a range of 9.0 to 11.0.

18. The method of claim 17, wherein step (S1') is performed in an oxidizing atmosphere.

[FIG. 1]

[FIG. 2]

(A)

(B)

[FIG. 3]

(A)

(B)

(C)

(D)

(E)

[FIG. 4]

[FIG. 5]

(A)

(B)

(C)

[FIG. 6]

[FIG. 7]

MINOR AXIS
(DIRECTION WITH THE SMALLEST DISPERSION ($\lambda_1^2$)
OF PARTICLE OUTER POINTS)

MAJOR AXIS
(DIRECTION WITH THE LARGEST DISPERSION ($\lambda_2^2$)
OF PARTICLE OUTER POINTS)

[FIG. 8]

(A)

(B)

# EP 4 644 330 A1

## INTERNATIONAL SEARCH REPORT

| International application No. |
|---|
| **PCT/KR2024/003488** |

| A. | CLASSIFICATION OF SUBJECT MATTER |
|---|---|
| | **C01G 53/00**(2006.01)i; **H01M 4/36**(2006.01)i; **H01M 4/505**(2010.01)i; **H01M 4/525**(2010.01)i; **H01M 4/02**(2006.01)i |

According to International Patent Classification (IPC) or to both national classification and IPC

| B. | FIELDS SEARCHED |
|---|---|

Minimum documentation searched (classification system followed by classification symbols)

C01G 53/00(2006.01); H01M 10/052(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 전구체(positive electrode active material precursor), 반응기 (reactor), 분쇄기(grinder)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2016156 B1 (RESEARCH & BUSINESS FOUNDATION SUNGKYUNKWAN UNIVERSITY) 29 August 2019 (2019-08-29)<br>See claims 1-10; paragraphs [0033]-[0087]; and figure 2. | 1-13 |
| Y | | 17-18 |
| A | | 14-16 |
| Y | KR 10-2021-0039962 A (LG CHEM, LTD.) 12 April 2021 (2021-04-12)<br>See claims 1-4; and paragraphs [0036]-[0184]. | 14-18 |
| Y | KR 10-2015-0083232 A (E&D CO., LTD.) 17 July 2015 (2015-07-17)<br>See claims 1-2; and paragraphs [0019]-[0032]. | 14-16 |
| A | US 9923190 B2 (YU, J. R. et al.) 20 March 2018 (2018-03-20)<br>See entire document. | 1-18 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 June 2024** | **27 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/003488** |

**C.**     **DOCUMENTS CONSIDERED TO BE RELEVANT**

| Category* | Citation of document, with indication, where appropriate, of the relevant passages | Relevant to claim No. |
| --- | --- | --- |
| A | KR 10-1941638 B1 (KOREA INSTITUTE OF SCIENCE AND TECHNOLOGY) 11 April 2019 (2019-04-11) <br>     See entire document. | 1-18 |

## INTERNATIONAL SEARCH REPORT
### Information on patent family members

International application No.

**PCT/KR2024/003488**

| Patent document cited in search report | | | Publication date (day/month/year) | Patent family member(s) | | | Publication date (day/month/year) |
|---|---|---|---|---|---|---|---|
| KR | 10-2016156 | B1 | 29 August 2019 | KR | 10-2019-0070458 | A | 21 June 2019 |
| KR | 10-2021-0039962 | A | 12 April 2021 | CN | 113784927 | A | 10 December 2021 |
| | | | | EP | 3950600 | A1 | 09 February 2022 |
| | | | | EP | 3950600 | B1 | 17 January 2024 |
| | | | | JP | 2022-530869 | A | 04 July 2022 |
| | | | | JP | 7384540 | B2 | 21 November 2023 |
| | | | | KR | 10-2463235 | B1 | 07 November 2022 |
| | | | | US | 11855287 | B2 | 26 December 2023 |
| | | | | US | 2022-0209232 | A1 | 30 June 2022 |
| | | | | WO | 2021-066576 | A1 | 08 April 2021 |
| KR | 10-2015-0083232 | A | 17 July 2015 | CN | 102714311 | A | 03 October 2012 |
| | | | | CN | 102714311 | B | 15 July 2015 |
| | | | | JP | 2013-517599 | A | 16 May 2013 |
| | | | | JP | 5687713 | B2 | 18 March 2015 |
| | | | | KR | 10-1185366 | B1 | 24 September 2012 |
| | | | | KR | 10-2011-0083383 | A | 20 July 2011 |
| | | | | US | 2013-0202966 | A1 | 08 August 2013 |
| | | | | WO | 2011-087309 | A2 | 21 July 2011 |
| US | 9923190 | B2 | 20 March 2018 | CN | 102714311 | A | 03 October 2012 |
| | | | | CN | 102714311 | B | 15 July 2015 |
| | | | | JP | 2013-517599 | A | 16 May 2013 |
| | | | | JP | 5687713 | B2 | 18 March 2015 |
| | | | | KR | 10-1185366 | B1 | 24 September 2012 |
| | | | | KR | 10-2011-0083383 | A | 20 July 2011 |
| | | | | US | 2013-0202966 | A1 | 08 August 2013 |
| | | | | WO | 2011-087309 | A2 | 21 July 2011 |
| | | | | WO | 2011-087309 | A3 | 15 December 2011 |
| | | | | WO | 2011-087309 | A9 | 09 February 2012 |
| KR | 10-1941638 | B1 | 11 April 2019 | KR | 10-2017-0073909 | A | 29 June 2017 |

Form PCT/ISA/210 (patent family annex) (July 2022)

**REFERENCES CITED IN THE DESCRIPTION**

**Patent documents cited in the description**

- KR 1020230035835

- KR 102013129449